# EUROPÄISCHE PATENTSCHRIFT

(11) **EP 1 100 395 B1**
(45) Veröffentlichungstag und Bekanntmachung des Hinweises auf die Patenterteilung: **06.04.2005**
(21) Anmeldenummer: 99932591.3
(22) Anmeldetag: 28.07.1999
(51) Int. Cl.: A61C 8/00

(54) **VORRICHTUNG ZUM HALTEN UND/ODER BILDEN EINES ZAHNERSATZES**
DEVICE FOR HOLDING AND/OR CREATING A DENTAL PROSTHESIS
DISPOSITIF POUR MAINTENIR ET/OU FORMER UNE PROTHESE DENTAIRE

(30) Priorität: 29.07.1998 CH 159398
(43) Veröffentlichungstag der Anmeldung: 23.05.2001
(60) Teilanmeldung: 05000771.5
(73) Patentinhaber: Sutter, Franz, 4435 Niederdorf (CH)
(72) Erfinder: Sutter, Franz, 4435 Niederdorf (CH)
(74) Vertreter: Eder, Carl E.
(86) Internationale Anmeldenummer: PCT/CH1999/000352
(87) Internationale Veröffentlichungsnummer: WO 2000/006042

(56) Entgegenhaltungen:
- WO-A-98/02110
- FR-A- 2 693 900
- FR-A- 2 745 998
- US-A- 5 310 343

## Beschreibung

Die Erfindung betrifft eine Vorrichtung zum Halten und/oder Bilden eines Zahnersatzes gemäss dem Oberbegriff des Anspruchs 1. Beim Zahnersatz kann es sich zum Beispiel um einen künstlichen Einzelzahn, eine Brücke oder eine mehrere Zähne aufweisende Prothese handeln.

Zahlreiche bekannte Vorrichtungen zur Bildung eines Zahnersatzes besitzen ein in einen Knochen implantierbares, aus Titan oder einer Titanlegierung bestehendes Implantat und ein im Bereich des Weichgewebes und/oder knapp oberhalb von diesem auf dem Implantat aufliegendes Aufbauelement. Ein Implantat mit einer an das Weichgewebe angrenzenden, metallischen Fläche verursacht jedoch manchmal Reizungen und Entzündungen des Weichgewebes. Das Aufbauelement besteht manchmal aus Gold oder einer Goldlegierung. Wenn Teile mit aus verschiedenen metallischen Materialien bestehenden Aussenflächen im Bereich des Weichgewebes oder in der Mundhöhle aneinanderstossen, können diese zusammen mit dem Säure enthaltenden Speichel und/oder der Gewebeflüssigkeit als galvanisches Element wirken, einen elektrischen Strom erzeugen und zusätzliche Reizungen verursachen. Bekannte Vorrichtungen haben häufig einen konischen oder zylindrischen, aus Titan oder einer Titanlegierung bestehen, aus dem Implantat herausragenden Pfeiler, auf dem eine Krone oder ein anderes Aufbauelement aufgebaut wird. Solche metallischen Pfeiler haben den Nachteil, dass sie schlecht im Mund eines Patienten an individuelle Formen angepasst werden können. Dies unter anderem deshalb, weil beispielsweise beim Beschleifen eines solchen Teils störende Metallpartikel entstehen und in dem Mund des Patienten gelangen. Wenn eine Porzellankrone auf einen metallischen Pfeiler aufgebracht wird, verursacht der Pfeiler zudem häufig einen ästhetisch störenden, matten Farbton der Porzellankrone.

Es ist zur Vermeidung von Reizungen des Weichgewebes bekannt, Vorrichtungen im Bereich des Weichgewebes mit einem keramischen Körper zu versehen. Die US 5 310 343 A offenbart zum Beispiel Vorrichtungen mit einem metallischen Grundkörper und einem mit diesem verschraubbaren metallischen Bolzen. Der Grundkörper und der Bolzen haben im Querschnitt von keramischem Material umschlossene Abschnitte. Bei diesen bekannten Vorrichtungen ist zwischen dem am Grundkörper angeordneten, keramischen Material und dem am Bolzen angeordneten keramischen Material ein metallischer Bund des Bolzens vorhanden. Dieser metallische Bund kann in Kontakt mit dem Weichgewebe gelangen und eventuell von aussen sichtbar sein und daher die durch das keramische Material angestrebten Wirkungen beeinträchtigen. Ferner kann das keramische Material nicht zusammenhängend vom Höhenbereich des Bolzens bis zum Höhenbereich des Grundkörpers beschliffen werden, ohne auch den metallischen Bund zu beschleifen. Es sollten jedoch keine metallischen Teile innerhalb des Mundes eine Patienten beschliffen werden, weil dabei Metallspäne in den Mund des Patienten gelangen. Bei den aus der US 5 310 393 A bekannten Vorrichtungen haben das Loch des Grundkörpers sowie der Bolzen konische ineinander steckende Abschnitte. Ferner bilden der Grundkörper und das an diesem angebrachte, keramische Material zusammen eine ebene Ringfläche, der bei zusammengebauter Vorrichtung eine ebene Ringfläche des Bundes zugewandt ist. Wegen der Fabrikationsungenauigkeiten können jedoch entweder nur die konischen Abschnitte des Grundkörper-Lochs und Bolzens oder nur die genannten ebenen Ringflächen spaltfrei aufeinander aufliegen. Wenn die konischen Abschnitte nicht spaltfrei aufeinander aufliegen, können der obere Bolzenabschnitt, das an diesem angeordnete, keramische Material und ein auf diesem aufgebauter Aufbau bezüglich des Grundkörpers quer zu dessen Achse gerichtete Mikrobewegungen ausführen. Wenn hingegen zwischen den Ringflächen ein Spalt vorhanden ist, können Mikroorganismen in diesen eindringen. Sowohl die erwähnten Mikrobewegungen als auch eindringende Mikroorganismen können die dauerhafte Befestigung der Vorrichtung im Mund eines Patienten gefährden.

Die WO 98/02110 A offenbart künstliche Zähne mit je einem metallischen Implantat, einem ebenfalls metallischen Stützpfeiler ("Abutment") und einer vorzugsweise keramischen Krone. Der Stützpfeiler hat einen in einem axialen Sackloch des Implantats befestigbaren Schaft und einen kegelstumpfförmigen Kopf, der im befestigten Zustand des Bolzens auf einem Ende des Implantats aufliegt. Die Krone liegt beim fertigen Zahn auf dem Kopf des Stützpfeilers sowie einer ringförmigen, konischen Fläche des Implantats auf. Bei diesen künstlichen Zähnen besteht also lediglich die Krone vorzugsweise aus Keramik, während des Implantat und der zum Halten der Krone dienende, in diese hineinragende Pfeiler ("Abutment") aus Metall bestehen. Nach dem Einsetzen eines solchen künstlichen Zahnes in den Mund eines Patienten kann daher höchstens noch die aus Keramik bestehende Krone, nicht aber der Pfeiler oder das Implantat beschliffen werden, da keine metallischen Späne in den Mund des Patienten gelangen sollten. Dies schränkt die Möglichkeiten zur Anpassung der Form des künstlichen Zahns an die Formen und Abmessungen der benachbarten Zähne stark ein. Zudem können Teile des metallischen Implantats unter Umständen in Kontakt mit dem Weichgewebe im Mund des Patienten gelangen und bei geöffnetem Mund des Patienten von aussen sichtbar sein, wodurch die durch die Verwendung von keramischem Material angestrebte Wirkung nur zum Teil erreicht wird.

Der Erfindung liegt die Aufgabe zugrunde, Nachteile der bekannten Vorrichtungen zu vermeiden und insbesondere ausgehend von der US 5 310 343 A eine Vorrichtung zu schaffen, deren aus dem Knochen herausragenden Teile problemlos soweit als erwünscht innerhalb vom Mund des Patienten beschliffen werden können. Die Vorrichtung soll ferner gewährleisten, dass keine Mikroorganismen zwischen das Implantat und die ursprüngliche von diesem getrennten und dann beim Zusammenbauen mit diesem verbundenen Teile eindringen können. Des Weiteren soll vorzugsweise ermöglicht werden, den ursprünglich vom Implantat getrennten keramischen Körper beim Zusammenbauen der Vorrichtung sehr stabil mit dem Implantat zu verbinden, so dass dieser keramische Körper auch unter der Einwirkung von grossen, ungefähr quer zur Achse des Grundkörpers einwirkenden Kräften möglichst keine Bewegungen gegenüber dem Grundkörper ausführt. Ferner soll die Vorrichtung bei der Bildung eines Zahnersatzes im Mund eines Patienten aus möglichst wenig separaten Teilen zusammensetzbar sein und eine schnelle sowie einfache Abdrucknahme bzw. Abformung ermöglichen.

Diese Aufgabe wird durch eine Vorrichtung gelöst, die gemäss der Erfindung die Merkmale des Anspruchs 1 aufweist.

Vorteilhafte Ausgestaltungen der Vorrichtung gehen aus den abhängigen Ansprüchen hervor.

Die Vorrichtung ermöglicht eine starre, stabile und dauerhafte, mittelbare Verbindung des am Bolzen befestigten, keramischen Körpers mit dem metallischen Grundkörper. Ferner muss ein Zahnarzt für die Bildung eines Zahnersatzes im Mund eines Patienten nur wenig separate Teile zusammensetzen. Der am Grundkörper befestigte keramische Körper und der am allfälligen Bolzen befestigte, keramische Körper ist beispielsweise durch ein Bindemittel direkt mit dem Grundkörper bzw. dem Bolzen verbunden. Das Bindemittel kann abhängig von der Ausbildung der miteinander zu verbindenden Teile aus einem dünnflüssigen, in einer dünnen Schicht auftragbaren Klebstoff oder aus einem relativ viskosen Klebstoff bzw. Zement bestehen, der zum Ausfüllen mindestens eines relativ grossen Zwischenraums geeignet ist. Der Klebstoff und/oder Zement kann beim Verbinden der Teile beispielsweise bei normaler Raumtemperatur aushärten oder zum Aushärten erwärmt werden. Der bzw. jeder keramische Körper kann möglicherweise statt durch einen Klebestoff bzw. Zement durch eine Hartlöt-Verbindung mit dem metallischen Grundkörper bzw. Bolzen verbunden sein. In diesem Fall besteht das Bindemittel dann aus einem Hartlot, das beim Verbinden des keramischen Körpers mit dem metallischen Grundkörper oder Bolzen vorübergehend erhitzt und geschmolzen wird. Das Bindemittel soll in allen Fällen biokompatibel, nicht toxisch und gut mit dem Knochen und Weichgewebe von Patienten verträglich sein. Der keramische Körper kann ferner zusammen mit dem Grundkörper oder dem Bolzen einen Press-Sitz bilden und statt durch ein Bindemittel oder zusätzlich'zu einem solchen durch eine Press-Verbindung mit dem Grundkörper bzw. Bolzen verbunden sein.

Der bzw. jeder keramische Körper kann separat - d.h. vom Grundkörper und allfälligen Bolzen getrennt - beispielsweise aus einer Teilchen aufweisenden, plastisch verformbaren, mehr oder weniger gut fliessfähigen Masse mit Hilfe einer Gussform oder dergleichen derart geformt werden, dass er mindestens im wesentlichen rotationssymmetrisch zu einer Achse. ist. Der geformte Körper wird dann, bevor er mit einem Grundkörper oder Bolzen verbunden wird, in üblicher Weise erhitzt und versintert. Einer oder jeder der zwei keramische Körper kann bei der Verwendung der Vorrichtung zur Bildung eines Zahnersatzes nötigenfalls noch im Mund eines Patienten stellenweise von einem Zahnarzt beschliffen und dadurch bei der Herstellung eines Aufbauelements bzw. einer Suprakonstruktion individuell geformt werden.

Der metallische Grundkörper und der allenfalls im Loch des Grundkörpers befestigte, metallische Bolzen kann beispielsweise aus Titan oder einer Titanlegierung bestehen. Jeder keramische Körper besteht vorzugsweise aus Oxidkeramik, beispielsweise aus Aluminiumoxid und/oder Magnesiumoxid und/oder Zirkoniumdioxid, und ist vorzugsweise elektrisch isolierend.

Der Erfindungsgegenstand und weitere Vorteile von diesem werden anschliessend anhand in den Zeichnungen dargestellter Ausführungsbeispiele erläutert. Dabei zeigen die
Fig. 1 ein teils in Seitenansicht und teils im Schnitt gezeichnetes Implantat mit einem metallischen Grundkörper und einem an diesem befestigten keramischen Körper,
Fig. 2 den separat, aufgeschnitten und in Schrägansicht dargestellten, keramischen Körper,
Fig. 3 einen Schnitt durch eine Vorrichtung mit dem in einem Knochen eingesetzten Implantat gemäss Fig. 1 und einen an diesem befestigten Aufbauelement,
Fig. 4 eine Schrägansicht von Teilen der Vorrichtung gemäss Fig. 3,
Fig. 5 einen Schnitt durch das Implantat gemäss Fig. 1 und ein anderes, an diesem befestigtes Aufbauelement,
Fig. 6 eine Schrägansicht einer Variante eines aufgebrochenen, keramischen Körpers,
Fig. 7 eine Schrägansicht einer anderen, teilweise aufgeschnittenen Vorrichtung,
Fig. 8 einen Axialschnitt durch eine weitere Vorrichtung, wobei zwei verschiedene Implantat-Varianten je zur Hälfte dargestellt sind,
Figuren 9, 10 Schrägansichten von Teilen der Vorrichtung gemäss Fig. 8,
Fig. 11 einen Axialschnitt durch eine Vorrichtung mit gleichen Implantat-Varianten wie Fig. 8,
Fig. 12 eine Schrägansicht von Teilen der in Fig. 11 gezeichneten Vorrichtung,
Fig. 13 einen Axialschnitt durch eine Vorrichtung,
Fig. 14 eine Schrägansicht eines Implantats mit mindestens einen Vorsprung aufweisenden, keramischen Körper,
Fig. 15 einen Axialschnitt durch Teile einer Vorrichtung mit einem Implantat gemäss Fig. 14,
Fig. 16 eine Ansicht von einem Abschnitt eines zum Implantat gemäss Fig. 14 passenden, unverdrehbar positionierbaren Körpers,
Fig. 17 einen Axialschnitt durch eine Vorrichtung mit einem anderen Implantat, dessen keramischer Körper mindestens einen Vorsprung aufweist,
Fig. 18 einen Axialschnitt durch ein anderes Implantat mit Vorsprüngen und
Fig. 19 einen Axialschnitt durch ein Implantat mit einem Ausnehmungen aufweisenden, keramischen Körper.

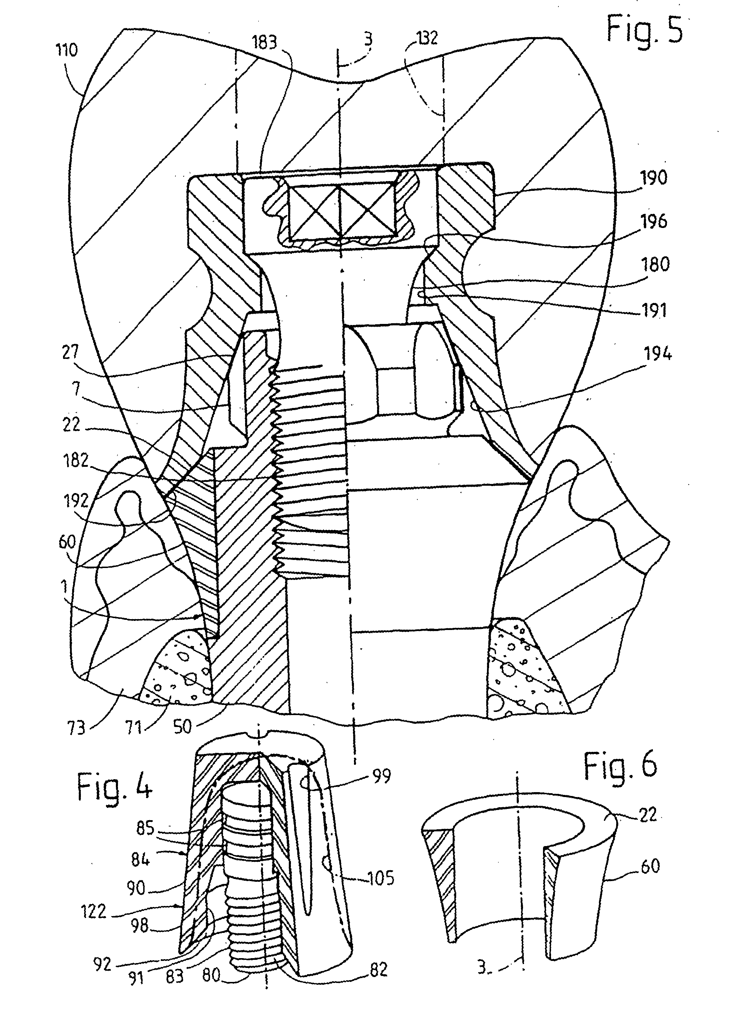

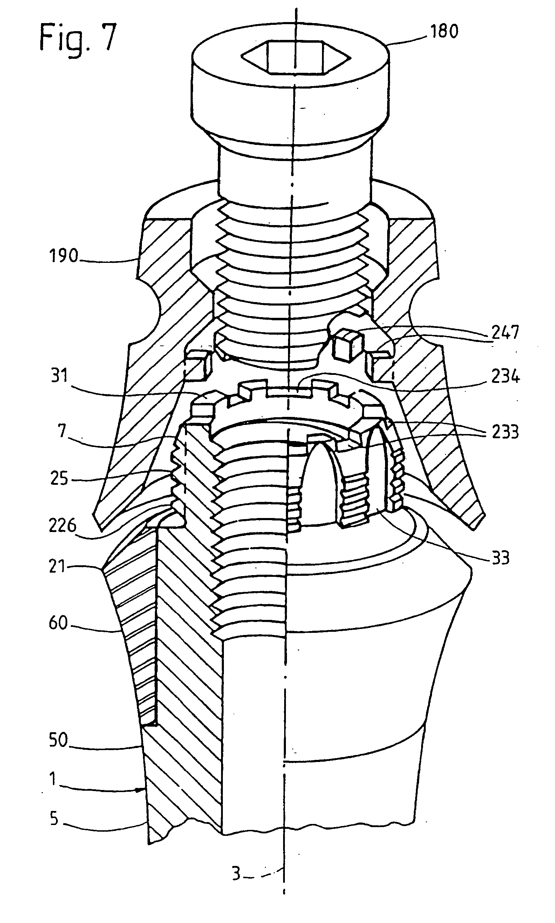

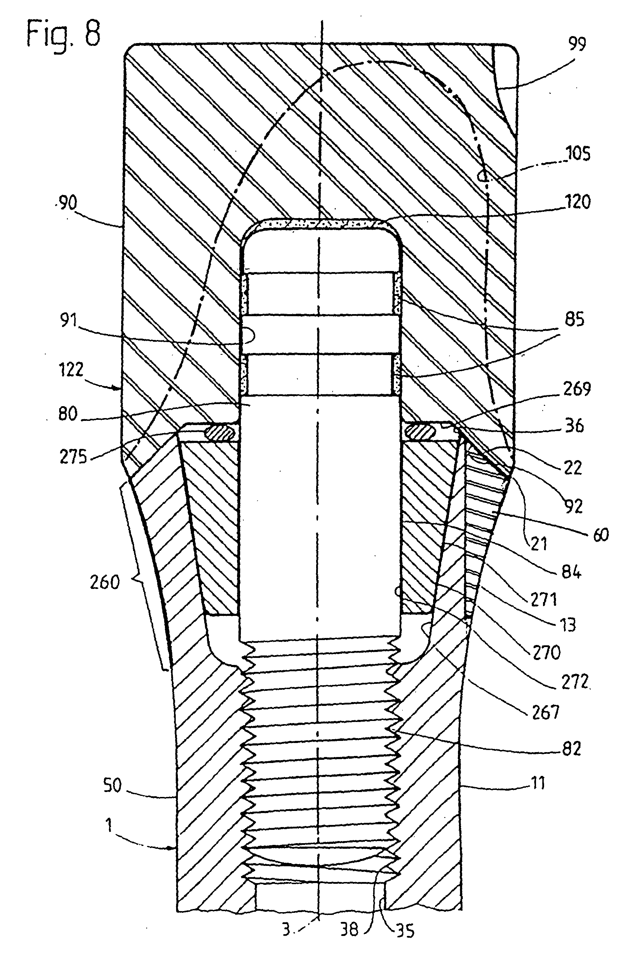

Die Figuren 5, 7, die linke Hälfte der Fig. 8 und die Figuren 11, 12, 16 zeigen nicht geschützte, aber dennoch zur Illustration der Erfindung dienende Vorrichtungsvarianten.

Zu den nachfolgend beschriebenen Ausführungsbeispielen wird darauf hingewiesen, dass einander entsprechende, identische oder ähnliche Teile der verschiedenen Ausführungsbeispiele jeweils mit der gleichen Bezugsnummer bezeichnet werden.

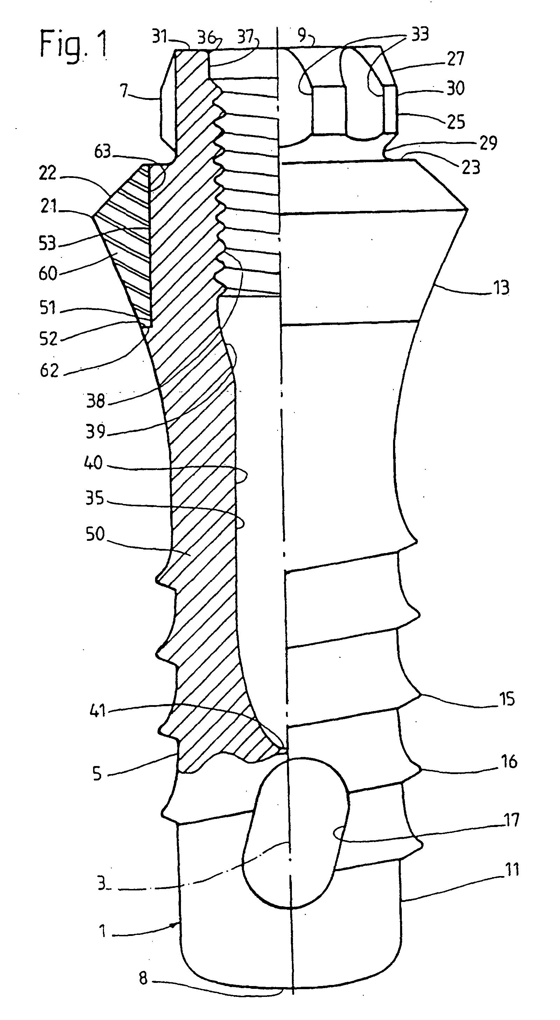

Das in Fig. 1 ersichtliche Implantat 1 ist im allgemeinen rotationssymmetrisch zu einer Achse 3 und weist unten eine zum Verankern in einem Knochen eines Unter- oder Oberkiefers bestimmte Verankerungspartie 5 und oben einen zum Herausragen aus dem Knochen bestimmten Kopf 7 auf. Die einander abgewandten, freien Enden der Verankerungspartie und des Kopfs bilden das erste Ende 8 bzw. das zweite Ende 9 des Implantats 1. Die Verankerungspartie 5 hat von unten nach oben einen im allgemeinen zylindrischen Abschnitt 11 und einen sich von diesem weg erweiternden, trompetenförmigen Abschnitt 13, dessen Aussenfläche stetig und glatt an die Aussenfläche des im allgemeinen zylindrischen Abschnitts 11 anschliesst. Der im allgemeinen zylindrische Abschnitt 11 ist mit einem Aussengewinde 15 mit einer schraubenlinienförmigen Rippe 16 versehen. Das Aussengewinde 15 ist beispielsweise selbstschneidend ausgebildet. Die Verankerungspartie ist in der Nähe ihres unteren Endes mit mehreren, beispielsweise drei um die Achse 3 herum verteilten, länglichen Nuten und/oder Löchern 17 versehen, welche die schraubenlinienförmige Rippe 16 des Aussengewindes kreuzen.

Am oberen, weiteren Ende des trompetenförmigen Abschnitts 13 ist eine Schulter 21 mit einer vom ersten Ende 8 weg nach oben gegen innen geneigten, konischen Schulterfläche 22 vorhanden. Diese bildet mit der Achse 3 einen Winkel von 40° bis 50° und beispielsweise 45°. An das obere, engere Ende der konischen Schulterfläche 22 schliesst eine ebene, zur Achse 3 rechtwinklige Ringfläche 23 an.

Der Kopf 7 ragt von der Ringfläche 23 weg nach oben, ist im allgemeinen zur Achse 3 rotationssymmetrisch und hat einen im wesentlichen zur Achse 3 parallelen, im allgemeinen zylindrischen Kopfabschnitt 25 sowie einen sich von diesem weg nach oben zum freien Ende des Kopfs und damit zum zweiten Ende 9 des ganzen Implantats hin verjüngenden, im allgemeinen konischen Kopfabschnitt 27. Die beiden Kopfabschnitte 25, 27 haben je eine zur Achse rotationssymmetrische, nämlich zylindrische bzw. konische Hüllfläche. Der maximale Durchmesser des Kopfs ist kleiner als die Durchmesser des Aussenrandes sowie auch des Innenrandes der konischen Schulterfläche 22. Die konische Hüllfläche des im allgemeinen konischen Kopfabschnitts 27 bildet mit der Achse 3 einen Winkel, der kleiner ist als der von der konischen Schulterfläche 22 mit der Achse gebildete Winkel und vorzugsweise 15° bis 25°, nämlich und zum Beispiel ungefähr 20° beträgt. Der zur Achse parallele Kopfabschnitt 25 ist durch eine im Axialschnitt konkav gebogene Ringnut 29 vom oberen Ende der Schulter 21 abgegrenzt. Der Kopf hat eine Umfangsfläche 30 und an seinem freien Ende eine das zweite Ende 9 des Implantats bildende ebene, ringförmige Stirnfläche 31. Die Umfangsfläche 30 des Kopfs 7 weist um die Achse herum abwechselnd aufeinanderfolgende Vorsprünge und Zwischenräume auf. Die Zwischenräume bestehen aus axialen Nuten 33, die im Querschnitt beispielsweise bogenförmig sind, jedoch statt dessen V-förmig, trapezförmig oder rechteckförmig sein könnten. Dabei sind vorzugsweise mehrere identisch ausgebildete sowie bemessene, erste Nuten sowie eine breitere und/oder tiefere, zweite Nut vorhanden. Die im Querschnitt tiefsten Bereiche der Nuten 33 erstrecken sich über die ganze Länge des zur Achse 3 parallelen Kopfabschnitts 25 und mindestens annähernd sowie beispielsweise genau bis zum dünneren Ende des konischen Kopfabschnitts 27 und also auch bis zum zweiten Ende 9 des ganzen Implantats.

Das Implantat 1 ist mit einem zur Achse 3 koaxialen Sackloch 35 versehen. Dieses besitzt eine sich beim zweiten Ende 9 befindende, von der ringförmigen Stirnfläche 31 umschlossene Mündung 36 und von dieser weg nach unten der Reihe nach kurzen, glatten, ersten zylindrischen Lochabschnitt 37, ein beispielsweise metrisches Innengewinde 38, einen Übergangsabschnitt 39, einen zweiten zylindrischen, glatten, d.h. gewindelosen Lochabschnitt 40 und einen Grund 41. Das untere, weiter von der Mündung entfernte Ende des Innengewindes 38 befindet sich innerhalb des sich erweiternden, trompetenförmigen Abschnitts 13 des Implantats. Der Durchmesser des zweiten, zylindrischen Lochabschnitts 40 ist kleiner als derjenige des ersten zylindrischen Lochabschnitt 37 und ungefähr gleich dem Kerndurchmesser des Innengewindes. Der Übergangsabschnitt 39 besteht aus einer ziemlich flachen Ringnut und hat eine Fläche, die im Axialschnitt stetig gebogen ist und stetig in die zylindrische Fläche des zweiten, zylindrischen Lochabschnitts übergeht. Der Grund 41 verjüngt sich zu seiner tiefsten Stelle hin und ist durch eine im Axialschnitt gebogene Fläche begrenzt, die stetig und glatt mit der Fläche des zweiten zylindrischen Lochabschnitts 40 zusammenhängt.

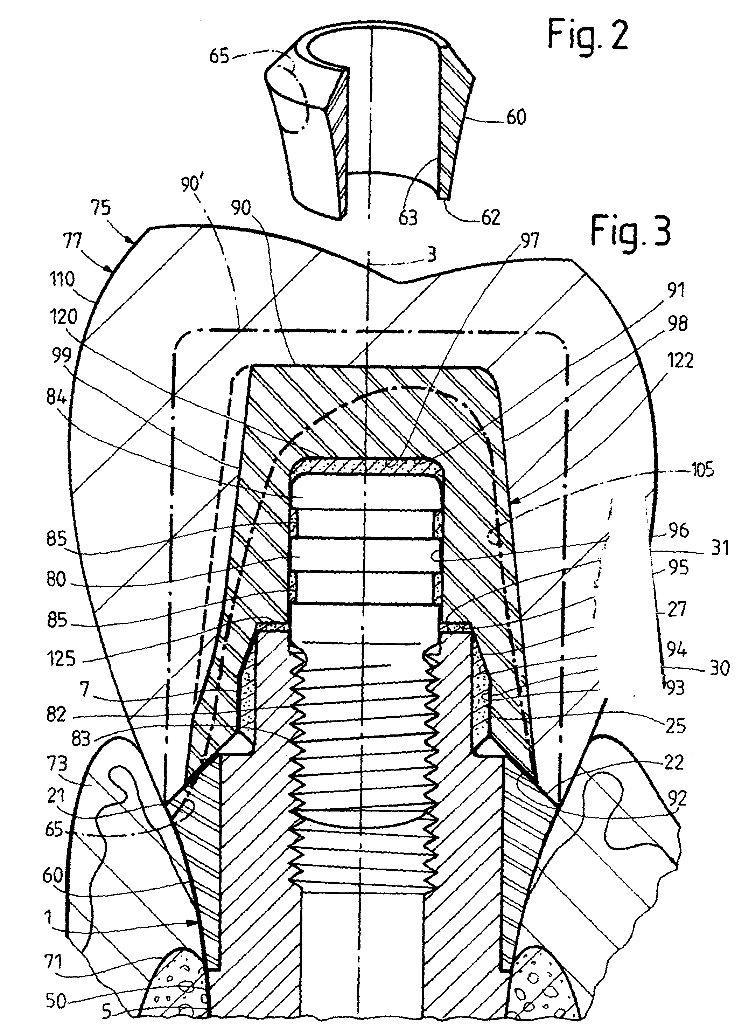

Das Implantat 1 besteht aus zwei ursprünglich separaten, einstückigen Körpern, nämlich einem länglichen, metallischen Grundkörper 50 und einem ringförmigen und/oder hülsenförmigen, noch separat in Fig. 2 gezeichneten, keramischen Körper 60. Der metallische Grundkörper 50 bildet den grössten Teil des Implantats 1 und erstreckt sich vom ersten Ende 8 bis zum zweiten Ende 9 des Implantats. Der metallische Grundkörper 50 bildet insbesondere auch mindestens den grössten Teil der Verankerungspartie 5, das ganzen Aussengewinde 15 sowie den ganzen Kopf 7 und die ganze Begrenzung des Sacklochs 35. Der keramische Körper 60 bildet den sich in der Umgebung der Schulter 21 befindenden Bereich der Aussen- und/oder Umfangsfläche des Implantats, nämlich den oberen Bereich der Umfangsfläche des trompetenförmigen Abschnitts 13, die konische Schulterfläche 22 und den äusseren Randbereich der ebenen Ringfläche 23. Der metallische Grundkörper 50 hat in der Höhe der Schulter 21 eine die Achse 3 und das Sackloch 35 umschliessende, ringförmige Kehle 51. Diese ist durch eine am untere Ende der Kehle angeordnete Anschlagfläche 52 und eine Halsfläche 53 gebildet bzw. begrenzt. Die Anschlagfläche 52 befindet sich ungefähr in der Höhe des Übergangsabschnitts 39 des Sacklochs 35. Die Halsfläche 53 ragt von der Anschlagfläche 52 weg nach oben, begrenzt einen Hals des Grundkörpers und erstreckt sich bis zur ebenen Ringfläche 23.

Der keramische Körper 60 hat am unteren Ende eine ringförmige Auflagefläche 62 und eine sich von dieser bis zum oberen Ende des keramische Körpers erstreckende Innenfläche 63. Die Anschlagfläche 52 des Grundkörpers 50 und die Auflagefläche 62 des keramischen Körpers 60 bilden mit der Achse 3 einen mindestens ungefähr rechten Winkel und nämlich einen genau rechten Winkel. Die beiden Flächen 52, 62 sind dementsprechend eben. Die Halsfläche 53 des Grundkörpers 50 und die Innenfläche 63 des Körpers 60 sind mindestens ungefähr parallel zur Achse und nämlich genau parallel zu dieser sowie zylindrisch. Die Innenfläche 63 des keramischen Körpers 60 umschliesst die Halsfläche 53 des metallischen Grundkörpers 50 zum Beispiel mit kleinen radialem Spiel. Der radiale Abstand der Innenfläche 63 von der Halsfläche 53 beträgt vorzugsweise höchstens 200 µm und zum Beispiel 5 µm bis 50 µm. Der keramische Körper 60 ist durch ein Bindemittel unlösbar mit dem Grundkörper 50 verbunden. Das Bindemittel besteht aus einem dünnflüssigen, in dünner Schicht auftragbaren Klebestoff, ist zwischen den beiden zylindrischen Flächen 53, 63 angeordnet und verbindet diese miteinander. Die beiden ebenen Flächen 52 und 62 liegen beispielsweise ohne dazwischen angeordnetes Bindemittel spaltfrei aufeinander auf, können aber eventuell ebenfalls durch ein Bindemittel miteinander verbunden sein. Der metallische Grundkörper 50 und der keramische Körper 60 bilden nach dem Aushärten des Bindemittels zusammen eine starre, untrennbare Einheit. Die von metallischen Grundkörper 50 und vom keramischen Körper 60 gebildeten Umfangsflächenbereiche des trompetenförmigen Abschnitts 13 können bei der Herstellung der beiden Körper 50, 60 derart ausgebildet werden, dass sie nach dem Verkleben der beiden Körper ohne Nachbearbeitung der letzteren praktisch glatt, stufenlos und fugenlos aneinander anschliessen.

Die Fig. 3 zeigt einen Knochen 71, beispielsweise den Unterkiefer, das diesen bedeckende Weichgewebe 73 - d.h. die Gingiva - eines Patienten und eine Vorrichtung 75. Die Vorrichtung 75 weist ein gemäss Fig. 1 ausgebildetes, in den Knochen 71 eingesetztes Implantat, 1 einen metallischen Bolzen 80 und ein Aufbauelement 77 bzw. eine Suprakonstruktion mit einem einstückigen, keramischen Körper 90 sowie einer Krone 110 auf. Der Bolzen 80 und der Körper 90 sind auch in Fig. 4 ersichtlich.

Der metallische Bolzen 80 hat einen Gewindeabschnitt 82 mit einem Aussengewinde 83 und einen zylindrischen, gewindelosen Abschnitt 84, dessen Aussendurchmesser gleich dem Aussendurchmesser des Gewindeabschnitts 82 oder ein wenig grösser als der letztgenannte Durchmesser ist. Der zylindrische Abschnitt 84 ist mit mindestens einer Ringnut 85 und beispielsweise mit zwei oder noch mehr solchen versehen. Zwischen dem Gewindeabschnitt 82 und dem zylindrischen Abschnitt 84 ist eine im Axialschnitt konkav gebogene Ringnut vorhanden.

Der keramische Körper 90 ist kappenförmig und/oder hülsenförmig und hat ein am unteren Ende des Körpers 90 offenes, am oberen Ende durch einen aus keramischen Material bestehenden Deckabschnitt des Körpers 90 geschlossenes, axiales Loch 91. Dessen Mündungsabschnitt ist durch eine sich von unteren Ende des Körpers 90 weg nach oben verjüngende, konische Auflagefläche 92 gebildet. Diese bildet bei zusammengesetzter Vorrichtung 75 mit der Achse 3 dem gleichen Winkel wie die Schulterfläche 22 und liegt mindestens auf dem inneren Bereich von dieser spaltfrei auf. Auf die konische Auflagefläche 92 folgen nach oben eine zylindrische Innenfläche 93 und eine konische Innenfläche 94. Diese Innenflächen 93, 94 umschliessen den im allgemeinen zylindrischen Kopfabschnitt 25 bzw. konischen Kopfabschnitt 27, wobei insbesondere zwischen dem konischen Kopfabschnitt und der konischen Innenfläche 94 höchstens ein sehr kleines Spiel vorhanden ist. An die konischen Innenfläche 94 schliesst eine ringförmige, zur Achse 3 radiale sowie rechtwinklige Innenfläche 95 an, die der Stirnfläche 31 des Implantats 1 in kleineren Abstand gegenübersteht. An das innere Ende der radialen Innenfläche 95 schliesst eine zylindrische Innenfläche 96 an, die dem zylindrischen Abschnitt 84 des Bolzens 80 mit höchstens kleinen Spiel umschliesst. Das obere Ende des Lochs 91 ist durch eine zum grössten Teil ebene Endfläche 97 gebildet, die der Endfläche des Bolzen im Abstand gegenübersteht. Der kappenförmige, keramische Körper 90 hat eine im allgemeinen zur Achse 3 rotationssymmetrische, nämlich eine sich nach oben verjüngende, konische Umfangsfläche 98, ist jedoch mit einigen entlang dem Umfang verteilten Ausnehmungen 99 versehen, in die ein Drehwerkzeug eingreifen kann. Der Körper 90 hat am oberen Ende eine Stirnfläche, die im wesentlichen, d.h. abgesehen von den Ausnehmungen 99, rotationssymmetrisch, und ferner glatt, eben sowie lochfrei ist.

Der Aussenrand der konischen Auflagefläche 92 des keramischen Körpers 90 hat beispielsweise einen kleineren Durchmesser als der Aussenrand der Schulterfläche 22, so dass die letztere noch einen den unteren Rand des keramischen Körpers 90 umschliessenden Bereich hat. Die Krone 110 besteht zum Beispiel aus einer Goldlegierung und/oder aus Porzellan und sitzt bei der fertigen Vorrichtung fest auf dem kappenförmigen, keramischen Körper 90. Die Krone liegt auf dem äusseren Bereich der Schulterfläche 22 auf und schliesst stufenlos sowie glatt an das obere Ende der Umfangsfläche des trompetenförmigen Abschnitt 13 des Implantats an. Der kappenförmige, keramische Körper 90 ist im obersten zylindrischen Abschnitt des Lochs 91 durch ein Bindemittel 120, beispielsweise einen relativ viskosen, in dicker Schicht auftragbaren Zement, unlösbar mit dem zylindrischen Abschnitt 84 des Bolzens 80 verbunden. Der Zement füllt dann die Ringnuten 85, und den Zwischenraum zwischen dem oberen Ende des Bolzens 80 sowie der Endfläche 97 des Lochs 91 aus. Abhängig von radialen Spiel kann eventuell auch noch zwischen den ringförmigen, zylindrischen Umfangsflächenabschnitten des zylindrischen Abschnitts 84 des Bolzens und der zylindrischen Innenfläche 96 des Körpers 90 Zement vorhanden sein. Es sei noch angemerkt, dass das Bindemittel in Fig. 4 nicht dargestellt wurde. Der Bolzen 80 und der kappenförmige, keramische Körper 90 bilden nach dem Aushärten des Bindemittels 120 bzw. Zements zusammen eine starre, untrennbare Einheit 122.

Der metallische Grundkörper 50, der metallischen. Bolzen 80 und die beiden keramischen Körper 60 und 90 werden in einen Herstellerwerk hergestellt. Die beiden keramischen Körper 60 und 90 werden im Herstellerwerk mittels der schon genannten Bindemittel, unlösbar sowie starr mit dem Grundkörper 50 bzw. Bolzen 80 verbunden. Das aus dem Grundkörper 50 sowie dem keramischen Körper 60 bestehende Implantat 1 und die aus dem Bolzen 80 und keramische Körper 90 bestehende Einheit 122 werden dann als zwei Einheiten beispielsweise an eine Zahnarztpraxis oder Zahnklinik geliefert.

Ein Zahnarzt kann das Implantat 1 gemäss der Fig. 3 transgigival in den Mund eines Patienten einsetzen, so dass die Verankerungspartie 5 des Implantats 1 zu einem grossen Teil in einem Loch des Knochens 71 verankert wird und der obere Endabschnitt des Implantats 1 aus dem Knochen herausragt. Der am Grundkörper 50 befestigte, keramische Körper 60 erstreckt sich ungefähr vom Kamm des Knochens 71 bis annähernd zum Kamm des Weichgewebes. Der Zahnarzt kann dann zunächst mit einer Schraube ein kappenförmiges Einheilelement an Implantat 1 befestigen, bis die Operationswunde verheilt ist. Nach der Einheilphase kann der Zahnarzt das Einheilelement entfernen und die aus dem Bolzen 80 und dem keramischen Körper 90 bestehende Einheit 122 am Implantat 1 befestigen. Der Zahnarzt kann hierzu mit einem Drehwerkzeug in die Ausnehmungen 99 des keramischen Körper 90 eingreifen und den Gewindeabschnitt 82 des Bolzens 80 in das Innengewinde 38 des Implantats 1 einschrauben, bis die Auflegefläche 92 des keramischen Körpers 90 spaltfrei auf der Schulterfläche 22 des Implantats aufliegt. Der untere Endabschnitt des zylindrischen Abschnitts 84 des Bolzens 80 ragt bei der fertigen Vorrichtung mit höchstens kleinem, radialen Spiel ein wenig in den zylindrischen Lochabschnitt 37 des Implantats 1 hinein. Die aus dem Bolzen 80 und dem keramischen Körper 90 bestehende Einheit 122 wird dann durch den Bolzen lösbar aber stabil mit dem Implantat 1 verbunden.

Eventuell kann der Zahnarzt vor dem Einschrauben des Bolzens 80 in das Implantat 1 noch ein Bindemittel 125 anbringen, das dem keramische Körper 90 zusätzlich mit der Umfangsfläche 30 und der Stirnfläche 31 des Kopfs 7 verbindet und die Nuten 33 des Kopfs 7 sowie den Zwischenraum zwischen der Stirnfläche 31 des Kopfs und der radialen Innenfläche 95 des Körpers 90 mindestens teilweise ausfüllt. Dieses Bindemittel 125 besteht zum Beispiel aus einem Provisoriumszement, wie es von Zahnärzten zur vorübergehende Befestigung von provisorischen eingesetzten Aufbauteilen verwendet wird und der eine ziemlich feste Verbindung ergibt, aber ermöglicht, die miteinander verbundenen Teile mit einer gewissen Kraft wieder voneinander zu trennen. Das Bindemittel 125 kann jedoch auch aus einem normalen, für eine dauerhafte, unlösbare Verbindung vorgesehenen Zement bestehen. Das allenfalls vorhandene Bindemittel 125 gibt zusätzlich zum an sich lösbar in das Implantat eingeschraubten Bolzen 80 noch eine nur mit einer gewissen Kraft oder überhaupt nicht zerstörungsfrei lösbare Verbindung des keramischen Körpers 90 mit dem Implantat 1. Das Implantat 1 und die aus dem Bolzen 80 sowie dem keramischen Körper 90 bestehende Einheit 122 bilden nach ihrer lösbaren oder unlösbaren Verbindung zusammen einen stabile, starren Support. Der Zahnarzt muss also für die Bildung dieses Supports lediglich zwei separate, dem Zahnarzt zur Verfügung gestellte Einheiten, nämlich das Implantat 1 und die Einheit 122, im Mund des Patienten zusammensetzen. Dies vereinfacht das Aufbauen eines Zahnersatzes im Mund eines Patienten.

Wenn der kappenförmige, keramische Körper 90 am Implantat 1 befestigt ist, kann der Zahnarzt für die Bildung eines Zahnersatzes einen Abdruck des oberen Implantatteils und des Körpers 90 nehmen, die Krone 110 herstellen lassen und die Krone mit nicht gezeichnetem Zement am keramische Körper 90 und eventuell an der Schulterfläche 11 befestigen. Nötigenfalls kann der Zahnarzt den keramischen Körper 60 und/oder den keramischen Körper 90 zur Optimierung des Form des Zahnersatzes noch innerhalb des Munds des Patienten stellenweise beschleifen. Dabei können zum Beispiel die in den Figuren 2, 3 und 4 durch strichpunktierte Linsen angedeuteten Bereiche 65 und 105 der beiden ursprünglich rotationssymmetrische Körper 60 bzw. 90 weggeschliffen werden. Da der der Schulterfläche 22 abgewandte Endabschnitt des keramischen Körpers 90 das obere, aus dem Implantat 1 herausragende Ende des Bolzens 80 bedeckt, kann nötigenfalls auch ein Teil des das obere Bolzenende bedeckenden, keramischen Materials weggeschliffen werden.

Der Bolzen 80 wird sowohl im Innengewinde 38 als auch im zylindrischen Lochabschnitt 37 des Implantats 1 seitlich abstützt. Der kappenförmige, keramische Körper 90 wird vom zylindrischen Abschnitt 84 des Bolzens gehalten und seitlich abgestützt. Ferner liegt der Körper 90 spielfrei und spaltfrei auf der Schulterfläche 22 des Implantats auf und wird zudem seitlich vom Kopf 7 abgestützt, und zwar insbesonders durch den konischen Kopfabschnitt 27 bis zum oberen, zweiten Ende 9 des Implantats 1. Das Aufbauelement 77 kann daher nebst ungefähr axialen Kräften auch grosse, ungefähr quer zur Achse 3 gerichtete Kräfte auf das Implantat übertragen, ohne infolge dieser Kräfte Bewegungen bezüglich des Implantats auszuführen. Dies gewährleistet eine grosse Stabilität des gebildeten Zahnersatzes.

Das an den Zahnersatz angrenzende Weichgewebe 73 liegt nach dem Einheilen bei der fertigen Vorrichtung mindestens zum grössten Teil an der Umfangsfläche des ringförmigen Keramikkörpers 60 an und ist praktisch an diesem angewachsen. Eventuell liegt auch noch Weichgewebe an der beispielsweise aus Porzellan bestehende Krone 110 an. Dagegen liegt das Weichgewebe nirgends oder mindestens fast nirgends an einer metallischen Fläche des Implantats an. Dies wirkt Entzündungen des Weichgewebes entgegen. Wenn die Krone 110 aus Porzellan besteht, ermöglicht der keramischen Körper 90, die Bildung einer glänzenden, farblich einem schönen, natürlichen Zahn entsprechende Krone. Falls die Krone 110 aus einem metallischen Material besteht, wird sie durch die beiden keramischen Körper 60 und 90 gegen den metallischen Grundkörper 50 des Implantats elektrisch isoliert, so dass kein galvanisch erzeugter, elektrischer Strom von der Krone 110 zum Implantat 1 fliessen kann.

Der in Fig. 3 mit vollen Linien gezeichnete, auch in Fig. 4 ersichtliche, keramische Körper 90 kann durch den strickpunktiert angedeuteten keramischen Körper 90' ersetzt werden. Dieser ist im wesentlichen ungefähr zylindrisch und hat an seinem unteren Ende eine ringförmige Auflagefläche, deren Aussendurchmesser ungefähr oder gleich dem Aussendurchmesser der Schulterfläche 22 ist.

Das Implantat 1 der in Fig. 5 dargestellten Vorrichtung ist gleich ausgebildet wie das in den Figuren 1 und 3 ersichtliche Implantat. Die in Fig. 5 ersichtlichen Vorrichtung besitzt jedoch anstelle des Bolzens 80 eine Okklusalschraube 180 und anstelle des keramischen Körper 90 einen metallischen Körper 190. Die Schraube 180 hat einen Gewindeabschnitt 182 und einen Kopf 183 mit einem Mehrkantloch, beispielsweise einem Sechskantloch. Der metallische Körper 190 ist kappenförmig und/oder hülsenförmig und hat jedoch anstelle eines axialen Sacklochs ein durchgehendes axiales Loch 191. Dieses ist abgestuft und hat zuunterst eine konische Auflagefläche 192 die bis zum Aussenrand der konischen Schulterfläche 22 des Implantats auf der Schulterfläche aufliegt. Der Körper 190 hat ferner eine konische Innenfläche 194, welche den konischen Kopfabschnitt 27 des Implantats 1 mit höchstens kleinem Spiel umschliesst. Das Loch 191 besitzt ferner eine sich nach oben konisch erweiternde Auflagefläche 196, auf welchem der Kopf der Okklusalschraube mit einer konischen Fläche aufliegt. Das Aufbauelement der in Fig. 5 ersichtliche Vorrichtung besitzt wiederum eine Krone 110. Diese ist an den Körper 190 angegossen und besteht zum Beispiel wie beim Aufbauelement gemäss Fig. 3 im allgemeinen aus Porzellan oder einer Goldlegierung. Der metallische Körper 190 hat einen vom Aussenrand der Auflagefläche 192 weg nach oben verlaufenden Aussenflächenabschnitt, der glatt und stetig an die Aussenfläche des keramischen Körpers 60 anschliesst und an den dann die Aussenfläche der Krone glatt und stetig anschliesst.

Die Krone 110 hat oberhalb des Kopfs 183 der Okklusalschraube 180 einen strichpunktiert angedeuteten, zylindrischen Bereich 132. Dieser besteht zum Beispiel aus einem nach dem Einsetzen der Schraube 180 mit einem Einsatz und/oder Zement oder dergleichen verschlossenen Loch und kann nötigenfalls später ohne Beschädigung der restlichen Krone wieder freigelegt - beispielsweise aufgebohrt - werden. Dies ermöglicht, die Okklusalschraube nachträglich wieder zu lösen und die Krone 110 sowie den Körper 190 vom Implantat 1 zu trennen. Die an das Weichgewebe angrenzende Fläche der Vorrichtung ist wiederum mindestens zu einem grossen Teil durch den keramischen Körper 60 gebildet.

Der keramische Körper 60 des in den Figuren 1, 3 und 5 ersichtlichen Implantats 1 kann durch den in Fig. 6 ersichtlichen, keramischen Körper 60 ersetzt werden. Dieser unterscheidet sich vom vorher beschriebenen Körper 60 dadurch, dass er am oberen Ende eine ebene, zur Achse 3 rechtwinklige Ringfläche hat. Diese befindet sich beim fertigen Implantat unterhalb des in Fig. 1 vom Grundkörper 50 gebildeten Hauptteils der Ringfläche 23 oder in der gleichen Höhe wie die letztere und bildet für sich allein oder zusammen mit der von Grundkörper 50 gebildeten Ringfläche eine zur Achse 3 rechtwinklige Schulterfläche 22.

Der hülsen- und/oder ringförmige Körper 60 könnte zudem anstelle der gegen oben nach aussen geneigte Umfangsfläche eine mindestens zum Teil zylindrischen oder sogar gegen oben nach innen geneigte Fläche haben.

Die zum Teil in Fig. 7 dargestellte Vorrichtung besitzt ein Implantat 1, dessen Verankerungpartie 5 und Schulter 21 gleich wie beim Implantat gemäss Fig. 1 ausgebildet sind. Hingegen ist der Kopf 7 anders ausgebildet als bei dem in Fig. 1 dargestellten Implantat. Der im allgemeinen zur Achse 3 parallele und im allgemeinen zylindrische Kopfabschnitt 25 ist nämlich noch mit einem Aussengewinde 226 versehen. Ferner sind die axialen Nuten 33 im Querschnitt statt bogenförmig beispielsweise ungefähr rechteck- oder trapezförmig. Des weiteren ist die ringförmige Stirnfläche 31 mit entlang dem Umfang verteilen, radialen Ausnehmungen bzw. Nuten 233, 234 versehenen, wobei mehrere identische, erste Ausnehmungen bzw. Nuten 233 und eine zweite, breitere und/oder tiefere Ausnehmung bzw. Nut 234 vorhanden sind. In Fig. 7 sind noch eine Okklusalschraube 180 und ein metallischer, kappenund/oder hülsenförmiger Körper 190 ersichtlich. Der letzere ist ähnlich wie der in Fig. 5 dargestellte Körper 190 ausgebildet, hat aber noch radial nach innen ragende Vorsprünge 247. Diese können mit höchstens kleinem Spiel in eine der ersten Ausnehmungen bzw. Nuten 233 eingreifen und den Körper 190 dadurch bezüglich des Implantats 1 drehfest in einer aus mehreren Drehstellungen auswählbaren Drehstellung positionieren.

An dem in Fig. 7 dargestellten Implantat kann jedoch anstelle der Okklusalschraube 180 und des metallischen Körpers 190 ein metallischer Bolzen mit einem starr an diesem befestigten, oben geschlossenen, keramischen Körper befestigt werden. Dieser Bolzen und keramische Körper können ähnlich wie die entsprechenden Teile in den Figuren 3 und 4 ausgebildet sein. Der keramische Körper hat insbesondere keine den Vorsprüngen 247 entsprechenden Vorsprünge, so dass die aus dem Bolzen und dem keramischen Körper bestehende Einheit durch Drehen von dieser am Implantat angeschraubt werden kann. Die Ausnehmungen bzw. Nuten 233 haben dann keine positionierende Wirkung. Das in Fig. 7 ersichtliche Implantat ermöglicht also wahlweise verschiedene Befestigungsarten.

Die zum Teil in Fig. 8 ersichtliche Vorrichtung besitzt ein Implantat 1, das gemäss der linken oder rechten Figurenhälfte ausgebildet sein kann. Beide zur Hälfte in der Fig. 8 dargestellten Implantat-Varianten haben vom unteren Ende der Verankerungspartie 5 bis zur Schulter 21 ungefähr die gleiche äussere Form wie das in Fig. 1 gezeichnete Implantat. Jedes in Fig. 8 ersichtliche Implantat besitzt insbesondere einen im allgemeinen zylindrischen Abschnitt 11, einen trompetenförmigen Abschnitt 13 und eine Schulter 21 mit einer konischen Schulterfläche 22. Das Implantat weist einen metallischen Grundkörper 50 auf, der bei der in der linken Figurenhälfte gezeichneten Variante auch mindestens den grössten Teil des trompetenförmigen Abschnitts 13 und der konische Schulterfläche 22 bildet. Der sich vom Aussenrand der Schulterfläche 22 bis in die Nähe des unteren Endes des trompetenförmigen Abschnitts 13 erstreckende Abschnitt der Umfangsfläche des metallischen Grundkörpers 50 ist bei der links gezeichneten Variante mit einem aufgesprühten, keramischen Überzug 260 versehen, der beispielsweise ungefähr 50 µm dick ist. Die in der rechten Hälfte der Fig. 8 gezeichnete Variante des Implantats hat - ähnlich wie das Implantat gemäss den Figuren 1 und 3 - einen ringförmigen und/oder hülsenförmigen, keramischen Körper 60, der mindestens den äussersten Teil sowie den Aussenrand der konischen Schulterfläche 22 und beispielsweise den grössten Teil von dieser oder sogar die ganze konische Schulterfläche 22 bildet. Das in Fig. 8 ersichtliche Implantat hat keinen dem Kopf 7 des in Fig. 1 dargestellten Implantats entsprechenden Kopf. Das axiale Sackloch 35 hat eine vom Innenrand der konischen Schulterfläche 22 gebildete Mündung 36. Ferner hat dass Sackloch 35 zwischen seinem Innengewinde 38 und seiner Mündung 36 eine sich zur letzeren hin erweiternden, konischen Lochabschnitt 267.

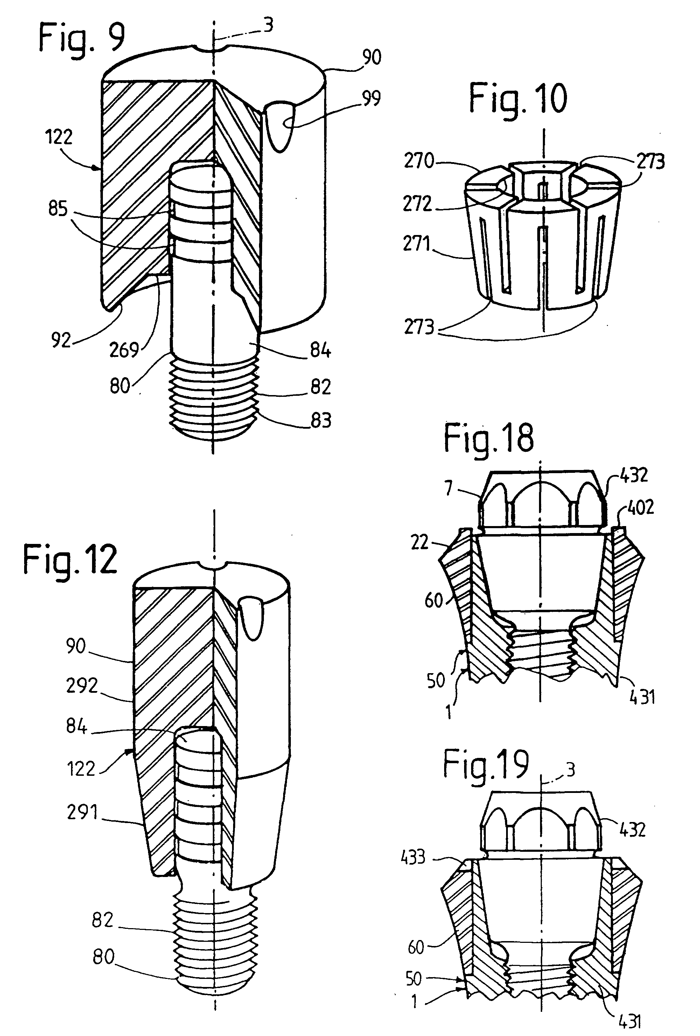

Die in Fig. 8 ersichtliche Vorrichtung besitzt ferner einen metallischen Bolzen 80 und einen hülsen- und/oder kappenförmigen, keramische Körper 90. Der Bolzen 80 und der Körper 90 sind auch in Fig. 9 ersichtlich. Der Bolzen 80 hat einen Gewindeabschnitt 82 und einen zylindrischen Abschnitt 84. Der letztere ist in der Nähe seines dem Gewindeabschnitt abgewandten Endes mit Ringnuten 85 versehen, während sein an den Gewindeabschnitt anschliessender Bereich nutenlos ist und eine glatte Zylinderfläche hat. Der in Fig. 8 dargestellte keramische Körper 90 hat wiederum ein axiales, unten offenes, oben geschlossenes, zum grössten Teil zylindrisches Loch 91 und eine konische Auflagefläche 92, die bei zusammengesetzter Vorrichtung auf der Schulterfläche 22 auftritt. An dem inneren Rand der konischen Auflagefläche 92 schliesst eine ebene, zur Achse 3 rechtwinklige Ringfläche 269 an. Der Aussenrand der Auflagefläche 92 hat ungefähr oder genau den gleichen Durchmesser wie der Aussenrand der Schulterfläche 22. Die Umfangsfläche des Körpers 90 hat zuunterst eine ringförmigen, schmalen sich nach oben erweiternden Abschnitt, der mindestens annähernd stetig an den von Überzug 260 gebildeten Umfangsflächenabschnitt des Implantats anschliesst. Der obere, grösste Teil der Umfangsfläche des Körpers 90 ist zylindrisch. Beim oberen Ende des Körpers 90 sind einige Ausnehmungen 99 zum Angreifen mit einem Drehwerkzeug vorhanden. Der obere Endabschnitt des Bolzens 80 ragt wie beim in Fig. 3 dargestellten Ausführungsbeispiel in das Loch 91 des keramischen Körpers 90 hinein und ist mit einem Bindemittel 120, nämlich Zement, unlösbar mit dem Körper 90 verbunden. Die Vorrichtung gemäss Fig. 8 besitzt noch einen auch separat in Fig. 10 gezeichneten, metallischen Ring 270. Dieser befindet sich bei zusammengesetzter Vorrichtung im konischen Lochabschnitt 267 des Implantats, umschliesst den zylindrischen Abschnitt 84 des Bolzens 80 und hat eine konische Aussenfläche 271 sowie eine zylindrische Innenfläche 272. Die konische Innenfläche des Lochabschnitts 267 sowie die konische Aussenfläche 271 bilden mit der Achse 3 den gleichen Winkel, der vorzugsweise 5° bis 10° und zum Beispiel ungefähr 8° beträgt. Der Ring ist durch in Fig. 10 ersichtliche, abwechselnd von unten und oben her eingeschnittene Einschnitte 273 in etwas federnde Segmente unterteilt. Zwischen der Ringfläche 269 des keramischen Körpers 90 und der ebenen, oberen Endfläche des Rings 270 ist ein deformierbarer Druckring 275 angeordnet. Dieser besteht zum Beispiel aus einem weichen, deformierbaren Metall, etwa Gold, oder aus einem elastischen oder sogar gummielastischen Kunststoff und hat den Zweck, den Ring 270 bei zusammengesetzter Vorrichtung möglichst tief in den Lochabschnitt 267 hinabzudrücken.

Der Bolzen 80 wird wiederum schon im Herstellerwerk durch das in Fig. 8, aber nicht in Fig. 9 gezeichnete Bindemittel 120 unlösbar mit dem keramischen Körper 90 verbunden, so dass der Bolzen 80 und der Körper 90 zusammen eine feste Einheit 122 bilden. Der Druckring 275 und der Ring 270 können ebenfalls schon im Herstellerwerk auf den Bolzen 80 aufgeschoben werden, wobei dann der Ring 270 leicht am Bolzen angeklemmt, aber noch entlang diesem verschiebbar ist. Das Implantat 1 und die Einheit 122 mit dem auf dem Bolzen 80 aufgesteckten Ringen 271 und 275 werden beispielsweise an einen Zahnarzt geliefert. Dieser kann dann das Implantat 1 transgingival in den Mund eines Patienten einsetzen. Nach dem Einheilen das Implantats 1 kann der Zahnarzt die Einheit 122 mit den beiden Ringen 271, 275 mit dem Implantat 1 verbinden, d.h. den Bolzen 80 in das Implantat einschrauben. Wenn die Auflagefläche 92 des Körpers auf der Schulterfläche 22 aufliegt, drückt der deformierbare Druckring 275 den Ring 270 nach unten, so dass dieser mit seiner Aussenfläche 271 fest und praktisch spielfrei an der Innenfläche der konischen Erweiterung 267 und mit seiner Innenfläche 272 an der zylindrischen Fläche des Bolzens 80 anliegt. Der Ring 271 zentriert daher den Bolzen und stützt diesen zwischen dem Innengewinde 38 sowie der Mündung 36 des Sacklochs 35 bis fast zur Mündung 36 seitlich im Implantat ab. Das Implantat 1 und die Einheit 122 bilden dann zusammen einen stabilen Support. Der Zahnarzt kann nach dem Einsetzen der Einheit 122 in den Mund des Patienten nötigenfalls mindestens einen Bereich 105 des keramischen Körpers 90 wegschleifen und eine Krone oder sonstige Suprakonstruktion auf diesem aufbauen. Die an das Weichgewebe angrenzende Fläche des Zahnersatzes wird dann mindestens zu einem grossen Teil durch die Umfangsfläche des keramischen Übergangs 260 und eventuell auch noch durch einen Abschnitt der Umfangsfläche des keramischen Körpers 90 gebildet.

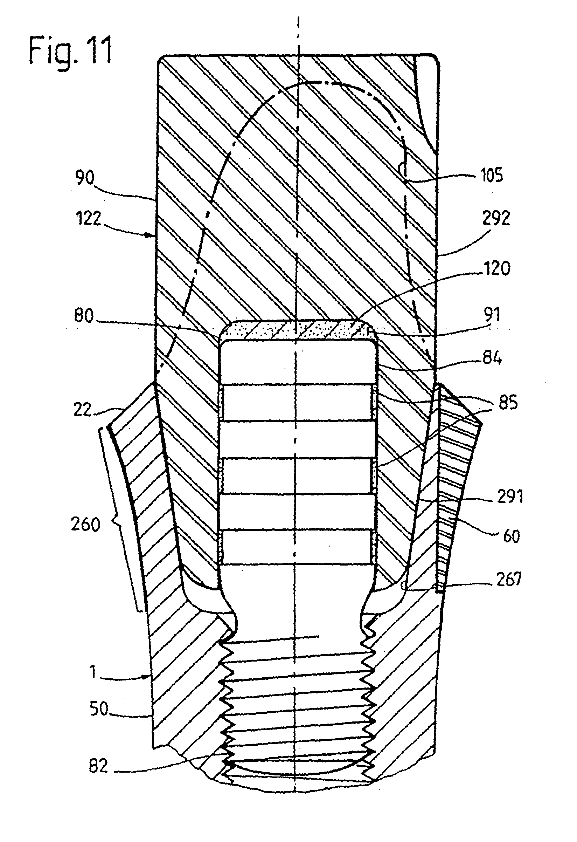

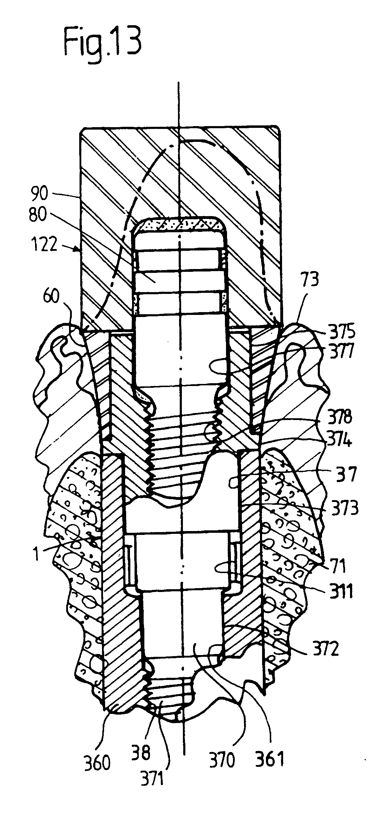

Die zum Teil in Fig. 11 ersichtliche Vorrichtung besitzt ein gemäss der linken oder rechten Figurenhälfte ausgebildetes Implantat 1. Die beiden je zur Hälfte gezeichneten Implantat-Varianten sind gleich wie die in Fig. 8 gezeichneten Implantat-Varianten ausgebildet und haben einen metallischen Grundkörper 50 sowie einen keramischen Überzug 260 bzw. Körper 60. Die Vorrichtung gemäss Fig. 11 besitzt ferner eine separat in Fig. 12 dargestellte Einheit 122 mit einem metallischen Bolzen 80 und einem keramischen Körper 90. Der Bolzen hat einen Gewindeabschnitt 82 sowie einen zylindrischen Abschnitt 84 und ist dem in Fig.3 gezeichneten Bolzen ähnlich, ragt jedoch bei zusammengesetzter Vorrichtung höchstens wenig aus dem Implantat heraus und hat im zylindrischen Abschnitt 84 beispielsweise drei statt zwei Ringnuten 85. Der in den Figuren 11 und 12 ersichtliche, keramische Körper 90 hat einen konischen Abschnitt 291, der sich zum unteren Ende des Körpers 90 hin verjüngt und bei zusammengebauter Vorrichtung fest sowie spielfrei im konischen Lochabschnitt 267 des Implantats sitzt. Der Körper 90 hat ferner einen im allgemeinen zylindrischen Abschnitt 292 der sich bei zusammengebauter Vorrichtung oberhalb des Implantats 1 befindet. Der Körper 90 der in Fig. 11 dargestellten Vorrichtung liegt im Gegensatz zum Körper 90 gemäss Fig. 8 nicht auf der Schulterfläche 22 auf, sondern wird von dieser umschlossen.

Der Bolzen 80 ragt wiederum in ein axiales, oben geschlossenes Loch 91 des Körpers 90 hinein und ist durch ein Bindemittel 120 mit diesem verbunden. Nach dem Einsetzen des Implantats in einen Knochen kann ein Zahnarzt die Einheit 122 in das Implantat einschrauben. Der konische Abschnitt 291 liegt dann spielfrei und fest an der Innenfläche des konischen Lochabschnitts 267 an und wird durch diese radial sowie auch axial abgestützt. Die aneinander anliegenden Konusflächen ergeben ferner eine Hemmung sowie Klemmwirkung, so dass die Einheit 122 sich praktisch nicht unbeabsichtigt von selbst lösen kann. Im übrigen könnte der konische Abschnitt 291 des Körpers 90 zusätzlich mit einem Bindemittel im Lochabschnitt 267 befestigt werden. Der zylindrische Abschnitt 292 des keramischen Körpers 90 kann nötigenfalls beschliffen werden, so dass er beispielsweise die in Fig. 11 strichpunktiert dargestellte Form erhält und der Bereich 105 weggeschliffen wird. Am konischen Abschnitt 292 kann zum Beispiel eine nicht gezeichnete, auf der Schulterfläche 22 aufliegende Krone befestigt werden.

Die in Fig. 13 dargestellte Vorrichtung hat ein Implantat 1 mit einem metallischen Grundkörper, der aus zwei einstückigen, lösbar miteinander verbundenen Teilen, nämlich einem im allgemeinen zylindrischen Körper 360 und einem in diesen eingeschraubten Zwischen-Bolzen 370 besteht. An diesem ist ein ringförmiger und/oder hülsenförmiger, keramischer Körper 60 gehalten. In den Zwischen-Bolzen 370 ist ein anderer Bolzen eingeschraubt, der wie der beispielsweise in den Figuren 3 und 4 ersichtliche Bolzen mit 80 bezeichnet ist. Am Bolzen 80 ist ein keramischer Körper befestigt, der kappenförmig sowie oben geschlossen und wie der kappenförmige, keramische Körper gemäss den Figuren 3 und 4 mit 90 bezeichnet ist. Der im allgemeinen zylindrische Körper 360 ist bis zu seinem oberen, zweiten Ende zylindrisch, kann jedoch eventuell noch ein nicht gezeichnetes Aussengewinde aufweisen und hat am oberen Ende eine ringförmige, ebene, zur Achse 3 rechtwinklige Fläche sowie ein axiales Sackloch. Dieses hat eine vom Innenrand der genannten, ringförmigen fläche gebildete Mündung, anschliessend an diese einen zylindrischen Lochabschnitt 37 und weiter unten ein Innengewinde 38. Der Durchmesser des zylindrischen Abschnitts 37 ist deutlich grösser als der maximale Durchmesser bzw. Nenndurchmesser des Innengewindes 38. Zwischen dem zylindrischen Abschnitt 37 und dem Innengewinde 38 ist ein Lochabschnitt 311 vorhanden, der entlang dem Umfang verteilte, nach innen ragende Vorsprünge und zwischen diesen vorhandene Zwischenräume besitzt, wobei die letzteren axiale Nuten bilden.

Das Sackloch des Körpers 360 hat zwischen dem Innengewinde 38 und dem Vorsprünge sowie Zwischenräume aufweisenden Lochabschnitt 311 noch einen gewindelosen, zylindrischen Lochabschnitt 361, dessen Durchmesser gleich dem Nenndurchmesser des Innengewindes oder ein wenig grösser als dieser und kleiner als der Durchmesser des an die Mündung des Sacklochs 35 anschliessenden, zylindrischen Lochabschnitts 37 ist. Der Zwischenbolzen 370 hat einen in das Innengewinde 38 eingeschraubten Gewindeabschnitt 371, zwei zylindrische, in den Lochabschnitten 361 und 37 geführte Bolzenabschnitte 372 bzw. 373, einen Bund 374 und einen vom letzteren weg nach oben ragenden, zylindrischen Bolzenabschnitt 375. Der Bund 374 hat oben und unten eine ebene Ringfläche und liegt auf der ringförmigen Endfläche des Körpers 360 auf. Der Zwischen-Bolzen 370 ist mit einem in sein oberes Ende mündenden Sackloch 377 versehen, das ein Innengewinde 378 hat. Der keramische Körper 60 liegt bei der in Fig. 13 gezeichneten Variante auf dem Bund auf 373 auf und umschliesst den zylindrischen Bolzenabschnitt 375. Der Bolzen 80 ist mit seinem Gewindeteil in das Innengewinde 378 des Zwischen-Bolzens 370 eingeschraubt. Der hülsenförmige, keramische Körper 60 hat an seinem oberen Ende eine ebene Ringfläche, die sich zum Beispiel ein wenig oberhalb der ringförmigen Endfläche des Bolzens 370 befindet und als Schulterfläche des Implantats 1 angesehen werden kann. Der kappenförmige, unlösbar am Bolzen 80 befestigte und mit diesem zusammen eine Einheit 122 bildende, keramische Körper 90 liegt mit einer ebenen, ringförmige Auflagefläche auf der genannten Ringfläche des keramischen Körpers 60 auf und drückt diesen gegen den Bund 374. Der hülsenförmige, keramische Körper 60 kann bei dieser Variante eventuell nur auf den Zwischen-Bolzen 370 aufgesteckt sein und wird dann bei zusammengebauter Vorrichtung durch die Einheit 122 am Zwischen-Bolzen 370 festgehalten. Der keramische Körper 60 kann jedoch zum Beispiel durch eine Press-Verbindung und/oder ein Bindemittel unlösbar am Zwischen-Bolzen 370 befestigt sein. Der metallische Körper 360 des Implantats 1 ist subgingival eingesetzt, so dass das Weichgewebe an den keramischen Körper 60 und eventuell auch noch ein wenig an den keramischen Körper 90 sowie den Bund 324 angrenzt.

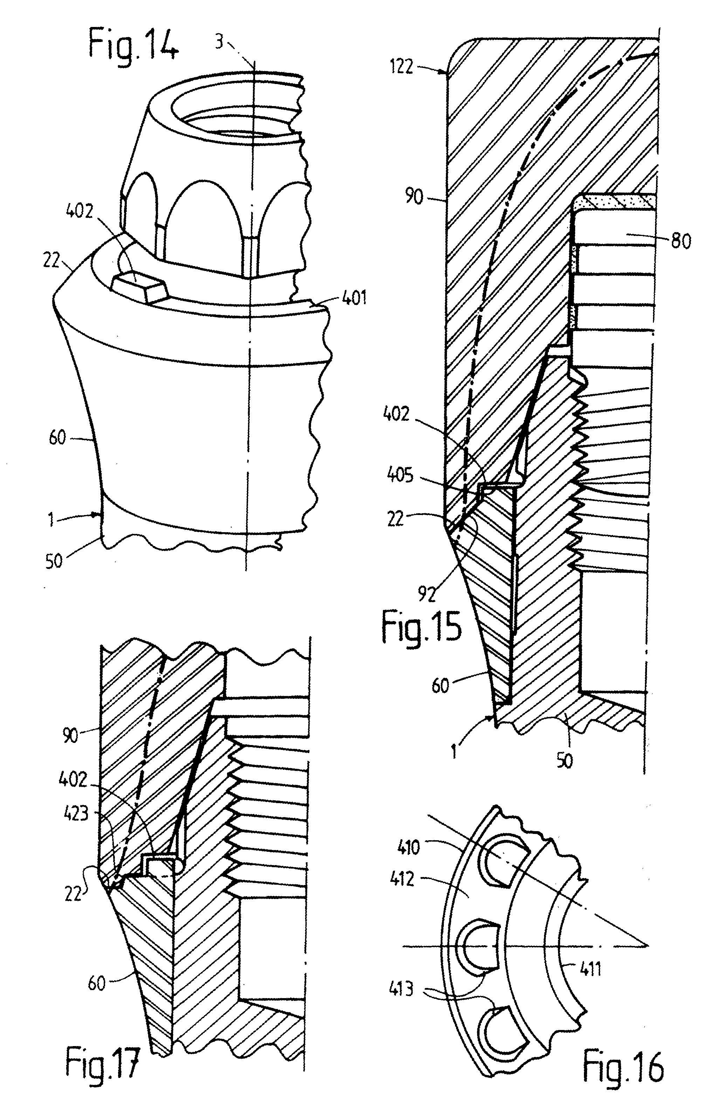

Das in den Figuren 14 und 15 dargestellte Implantat 1 ist ähnlich ausgebildet wie das Implantat 1 und besitzt einen einstückigen, metallischen Grundkörper 50 sowie einen an diesem befestigten, ring- und/oder hülsenförmigen, keramischen Körper 60. Dieser bildet wie beim Implantat gemäss Fig. 1 die konische Schulterfläche 22 des Implantats. Der keramische Körper 60 hat jedoch auf seiner Stirnseite beim oberen, inneren Rand der konischen Schulterfläche 22 noch eine relativ breite, ringförmige zum grössten Teil ebene Stirnfläche 401. Diese ist mit einem axial vorstehenden Vorsprung 402 oder Nocken 402 versehen, wobei eventuell mehrere gleichmässig entlang dem Umfang der Ringfläche um die Achse 3 herum verteilte Vorsprünge 402 vorhanden sein können.

An dem in den Figuren 14 und 15 ersichtlichen Implantat 1 kann zum Beispiel die in Fig. 15 gezeichnete Einheit 122 befestigt werden, die einen Bolzen 80 und einen an diesem befestigten, keramischen Körper 90 aufweist. Der Bolzen 80 und der keramische Körper 90 sind ähnlich wie in Fig. 3 ausgebildet. Der keramische Körper 90 liegt bei zusammengebauter Vorrichtung insbesondere mit einer ringförmigen, konischen Auflagefläche 92 auf der konischen Schulterfläche 22 auf. Der in Fig. 15 gezeichnete Körper 90 besitzt jedoch innerhalb der konischen Auflagefläche 92 eine ringförmige Kehle 405, in die bei zusammengebauter Vorrichtung der bzw. jeder Vorsprung 402 mit Spiel hineinragt. Die Kehle 405 ermöglicht, die Einheit 122 durch Drehen ohne Behinderung durch den Vorsprung 402 oder die Vorsprünge 402 am Implantat festzuschrauben.

Der teilweise in Fig. 16 ersichtliche, vorzugsweise metallische, beispielsweise aus Gold oder einer Goldlegierung bestehende, kappenförmige Körper 410 kann anstelle der in Fig. 15 gezeichneten Einheit 122 am Implantat gemäss den Figuren 14, 15 befestigt werden. Der Körper 410 ist ähnlich wie der in Fig. 5 ersichtliche Körper 190 ausgebildet und hat wie dieser ein durchgehendes axiales Loch 411, so dass er analog wie der Körper 190 mit einer Okklusalschraube am Implantat befestigt werden kann. Der Körper 410 hat eine ringförmige, im allgemeinen konische Auflagefläche 412, die mindestens zum Teil auf der konischen Schulterfläche 22 des Implantats 1 aufliegt, wenn der Körper 410 an diesem befestigt ist. Die Auflagefläche 412 ist mit mehreren - beispielsweise zwölf - gleichmässig entlang der Auflagefläche verteilten Ausnehmungen 413 versehen. Wenn der Körper 410 am Implantat gemäss Fig. 14 befestigt ist, ragt der bzw. jeder Vorsprung 402 in eine Ausnehmung 413 hinein und sichert den Körper 410 gegen Drehungen. Der Körper 410 kann also wahlweise in einer von mehreren Drehstellungen bezüglich des Implantats 1 drehfest positioniert werden.

Die in Fig. 17 gezeichnete Vorrichtung ist ähnlich ausgebildet wie die Vorrichtung gemäss Fig. 15. Der in Fig. 17 ersichtliche, keramische Körper 60 besitzt jedoch anstelle einer konischen Schulterfläche eine ebene, ringförmige Schulterfläche 22, an die innen eine ringförmige Stufe 423 mit einer steilen, leicht konischen oder zylindrischen Flanke und einer ebenen, mit mindestens einem Vorsprung 402 versehenen Ringfläche anschliesst. Der keramische Körper 90 ist derart ausgebildet, dass er mit einer ringförmigen, ebenen Auflagefläche spaltfrei auf der ebenen Schulterfläche 22 aufliegt.

Das in Fig. 18 dargestellte Implantat 1 hat eine ähnliche Umrissform wie das Implantat gemäss der Figuren 14 und 15, besitzt jedoch einen Grundkörper 50, der aus zwei ursprünglich separaten Teilen, nämlich einem Primärteil 431 und einem Sekundärteile 432 gebildet ist. Der letztere hat einen in ein Sackloch des Primärteils eingeschraubten Bolzen und einen aus dem Primärteil herausragenden Abschnitt, der den Kopf 7 des Implantats 1 bildet. Der am Primärteil 431 befestigte, keramische Körper 60 bildet die Schulterfläche 22 des Implantats und hat zwei oder mehr entlang seinem Umfang verteilte Vorsprünge 402 oder Nocken 402.

Das in Fig. 19 dargestellte Implantat hat wie das Implantat gemäss Fig. 18 einen aus einem Primärteil 431 und einem Sekundärteil 432 bestehenden, metallischen Grundkörper 50. Der am Primärteil 431 befestigte, keramische Körper 60 hat auf seiner Stirnseite anstelle von Vorsprüngen 402 mindestens eine Ausnehmung 433 und zum Beispiel zwei oder mehr entlang dem Umfang verteilte Ausnehmungen 433. Jede Ausnehmung 433 besteht aus einer zur Achse 3 radialen Nut. An dem gemäss Fig. 19 ausgebildeten Implantat kann wahlweise eine Einheit mit einem Bolzen und einem keramischen, nicht in die Ausnehmungen eingreifenden Körper oder ein metallischer, kappenförmiger Körper befestigt werden, der mindestens einen in eine Ausnehmung 433 eingreifenden Vorsprung hat und dadurch drehfest positioniert wird.

Es sei noch darauf hingewiesen, dass mindestens der äusserste Ringbereich der von den keramischen Körpern 60 gebildeten Schulterflächen 22 bei allen in den Figuren 14, 15, 17 bis 19 dargestellten Implantaten entlang dem ganzen Umfang lückenlos glatt und entweder konisch oder eben ist. Die an diesen Implantaten befestigten Körper können daher trotz der Vorsprünge oder Ausnehmungen entlang dem ganzen Umfang der Schulterflächen spaltfrei an diesen anliegen. Die Vorsprünge 402 und Ausnehmungen 433 der keramischen Körper 60 befinden sich auf einem zur Achse 3 koaxialen Ringbereich, der den Kopf des Implantats in axialer Projektion umschliesst. Die Vorsprünge 402 und Ausnehmungen 433 haben daher einen relativ grossen, radialen Abstand von der Achse 3. Dies trägt zu einer genauen Positionierung und stabilen Drehsicherung von Körpern bei, die an den Implantaten befestigt sind und mit den Vorsprüngen bzw. Ausnehmungen in Eingriff stehen.

Ferner kann auch ein an einem einteiligen oder zweiteiligen, metallischen Grundkörper befestigter, keramischer Körper mit einer ebenen, ringförmigen Schulterfläche mit mindestens einem Vorsprung oder mindestens einer Ausnehmung versehen werden. Die Vorsprünge bzw. Ausnehmungen können sich dann beispielsweise in radialer Richtung nur über den inneren Teil der Schulterfläche erstrecken, so dass die Schulterfläche aussen einen entlang dem ganzen Umfang zusammenhängenden, glatten, ebenen Abschnitt hat.

Die keramischen Körper 60 der Implantate gemäss den Figuren 14 bis 19 und der im vorangehenden Absatz beschriebenen Implantat-Varianten können - analog wie das Implantat gemäss Fig. 7 - mehrere identische, erste Vorsprünge oder Ausnehmungen und einen anders bemessenen, zweiten Vorsprung bzw. eine anders bemessene, zweite Ausnehmung haben. Es können zum Beispiel mehrere identische, erste Vorsprünge und ein schmälerer und/oder niedriger zweiter Vorsprung bzw. mehrere identische, erste Ausnehmungen und eine zweite, breitere und/oder tiefere Ausnehmung vorhanden sein. Die mit einer Schraube am Implantat befestigbaren Körper können dann derart ausgebildete, mit den Vorsprüngen und/oder Ausnehmungen der keramischen Körper zusammenwirkende Ausnehmungen und/oder Vorsprünge aufweisen, dass ein Implantat den an ihm befestigten Körper - abhängig von dessen Ausbildung - wahlweise in einer von mehreren Drehstellungen oder nur in einer einzigen Drehstellung drehfest positioniert.

Die anhand der Figuren 5 bis 19 beschriebenen Teile können - soweit bei der Beschreibung der entsprechenden Figuren nicht anderes geschrieben - jeweils ähnlich ausgebildet sein und ähnliche Eigenschaften aufweisen wie beim zuerst beschriebenen und/oder wie bei einem anderen vorher beschriebenen Ausführungsbeispiel.

Die Vorrichtungen können noch auf andere Arten geändert werden. Es können insbesondere Merkmale verschiedener Ausführungsbeispiele miteinander kombiniert werden.

Ein Bolzen 80 und das Loch 91 das am Bolzen befestigten, keramischen Körpers 90 können im Querschnitt zur Achse nicht-rotationssymmetrische Abschnitte haben, die mit höchstens kleinem Spiel ineinander hineinpassen. Die genannten Abschnitte können zum Beispiel mehrkantförmig sein oder mindestens eine ebene Fläche haben, die zur Achse parallel ist oder mit dieser einen von 90° verschiedenen Winkel bildet. Dadurch wird der keramische Körper 90 unverdrehbar auf dem Bolzen positioniert und zusätzlich gegen Drehungen relativ zum Bolzen gesichert.

Die Verankerungspartie des Implantats kann sich ferner mindestens annähernd über ihrer ganzen Höhe zum unteren, ersten Ende des Implantats hin ähnlich wie eine natürliche Zahnwurzel verjüngen, aber beispielsweise noch ein Aussengewinde aufweisen, so dass das Implantat nach der Extraktion eines Zahns sofort in den Knochen eingesetzt werden kann.

Im übrigen können die in den verschiedenen Figuren gezeichneten Implantate auch in Kombination mit anderen Aufbauelementen bzw. Suprakonstruktionen und sonstigen Teilen verwendet werden, die beispielsweise zur Bildung von Einzelzähnen, Brücken und Prothesen mit mehreren künstlichen Zähnen dienen.

## Patentansprüche

1. Vorrichtung zum Halten und/oder Bilden eines Zahnersatzes, mit einem zum mindestens teilweisen Verankern in einem Knochen (71) bestimmten Implantat (1), das eine Achse (3), eine mit dieser einen Winkel bildende, ringförmige Fläche (22), einen metallischen Grundkörper (50) mit einem axialen Loch (35, 377) und einen keramischen Körper (60) aufweist, der am Grundkörper (50) befestigt ist, im Querschnitt einen Abschnitt des Grundkörpers (50) umschliesst und mindestens einen Teil der ringförmigen Fläche (22) bildet, und mit einem andern keramischen Körper (90), der an einem metallischen, im Loch (35) des Grundkörpers (50) befestigbaren Bolzen (80) befestigt ist, **dadurch gekennzeichnet, dass** anstelle des Bolzens (80) eine im Loch (35) des Grundkörpers (50) befestigbare Schraube (180) vorhanden sein kann, die bei zusammengebauter Vorrichtung mit einem Kopf (183) auf einer Auflagefläche des andern keramischen Körpers aufliegt, und dass der am Bolzen (80) befestigte und mit diesem am Implantat (1) befestigbare oder mit der Schraube (180) am Implantat (1) befestigbare, andere keramische Körper (90) bei zusammengeschraubter Vorrichtung mit einer ringförmigen Auflagefläche (92) unmittelbar auf der ringförmigen Fläche (22) des Implantats (1) und dem diese ringförmige Fläche (22) mindestens zum Teil bildenden, zum Implantat (1) gehörenden keramischen Körper (60) aufliegt.

2. Vorrichtung nach Anspruch 1, **dadurch gekennzeichnet, dass** das Loch (91) des am Bolzen (80) befestigten, anderen keramischen Körpers (90) ein Sackloch ist und ein dem Grundkörper (90) abgewandtes, durch keramisches Material des keramischen Körpers (90) abgeschlossenes Ende hat.

3. Vorrichtung nach Anspruch 1 oder 2, **dadurch gekennzeichnet, dass** die ringförmige Fläche (22) des Implatats (1) und die Auflagefläche (92) konisch sind oder dass der genannte andere keramische Körper (90) bei zusammengesetzter Vorrichtung mit einem konischen Abschnitt (291) in einem konischen Abschnitt (267) des Lochs (35) des Grundkörpers (50) sitzt.

4. Vorrichtung nach einem der Ansprüche 1 bis 3, **dadurch gekennzeichnet, dass** das Implantat (1) einen von der ringförmigen Fläche (22) wegragenden Kopf (7) hat, der den genannten anderen keramischen Körper (90), wenn dieser bei zusammengebauter Vorrichtung auf der ringförmigen Fläche (22) aufliegt, bei mindestens einer vom Loch (91) des keramischen Körpers (90) gebildeten Innenfläche (93, 94) mit höchstens kleinem, radialem Spiel abstützt.

5. Vorrichtung nach einem der Ansprüche 1 bis 4, **dadurch gekennzeichnet, dass** das Implantat (1) ein erstes zum tiefsten Einsetzen in den Knochen (71) bestimmtes Ende (8) und ein zweites Ende (9) hat und dass die ringförmige Fläche (22) des Implantats (1) mindestens zum Teil konisch und nach aussen zum ersten Ende (8) des Implantats (1) hin geneigt ist.

6. Vorrichtung nach einem der Ansprüche 1 bis 5, **dadurch gekennzeichnet, dass** das der zum Implantat (1) gehörende, den metallischen Grundkörper (50) umschliessende, keramische Körper (60) ringförmig und/oder hülsenförmig ist sowie durch eine Press-Verbindung und/oder ein Bindemittel und/oder eine Hartlöt-Verbindung im wesentlichen unlösbar am Grundkörper (50) befestigt ist.

7. Vorrichtung nach einem der Ansprüche 1 bis 6, **dadurch gekennzeichnet, dass** das Loch (35, 377) des Grundkörpers (50) ein Innengewinde (38, 378) hat, dass der Bolzen (80) ein in dieses einschraubbares Aussengewinde (83) hat, dass das Loch (35, 377) des Grundkörpers (50) eine Mündung (36) und zwischen dieser und dem Innengewinde (38, 378) einen zylindrischen oder konischen Lochabschnitt (37, 267, 377) mit einem grösseren Durchmesser als das Innengewinde (38, 378) aufweist und dass dieser Lochabschnitt (37, 267, 377) bei zusammengesetzter Vorrichtung unmittelbar den Bolzen (80) oder einen diesen umschliessenden Ring (271) oder einen in den Lochabschnitt (37, 367) hineinragenden Abschnitt (291) des keramischen Körpers (90) mit höchstens kleinem radialem Spiel abstützt.

8. Vorrichtung nach einem der Ansprüche 1 bis 7, **dadurch gekennzeichnet, dass** der Bolzen und das Loch des an diesem befestigten, keramischen Körpers mit höchstens kleinem Spiel ineinander hineinpassende, nicht-rotationssymmetrische Abschnitte haben und zum Beispiel mehrkantförmig sind und/oder mindestens eine ebene Fläche haben, die zur Achse parallel ist oder mit dieser einen von 90° verschiedenen Winkel bildet.

9. Vorrichtung nach einem der Ansprüche 1 bis 8, **dadurch gekennzeichnet, dass** der zum Implantat (1) gehörende, am Grundkörper (50) befestigte, keramische Körper (60) an seinem genannten Ende mindestens einen Vorsprung (402) und/oder mindestens eine Ausnehmung (433) hat, dass mindestens ein äusserer Bereich der ringförmigen Fläche (22) des Implantats (1) den bzw. jeden Vorsprung (402) und/oder die bzw. jede Ausnehmung (433) umschliesst und entlang seinem ganzen Umfang lückenlos glatt sowie konisch oder eben ist und dass der mit einem Bolzen (80) oder einer Schraube (180) am Implantat befestigbare, andere keramische Körper (90) bei zusammengebauter Vorrichtung entlang dem ganzen Umfang der Auflagefläche (92) auf dem genannten Bereich der ringförmigen Fläche (22) des Implantats (1) aufliegt.

10. Vorrichtung nach Anspruch 9, **dadurch gekennzeichnet, dass** der genannte andere, mit dem Bolzen (80) oder der Schraube (180) am Implantat (1) befestigbare, keramische Körper (90) beim Zusammensetzen der Vorrichtung nicht in Eingriff mit dem mindestens einen Vorsprung (402) und/oder der mindestens einen Ausnehmung (433) gelangt und bis zu seiner Befestigung um die Achse (3) drehbar ist oder dass der genannte andere, mit einer Schraube (180) am Implantat (1) befestigbare, keramische Körper bei zusammengebauter Vorrichtung durch den mindestens einen Vorsprung (402) und/oder die mindestens eine Ausnehmung (433) in einer Drehstellung drehfest positioniert wird, wobei diese Drehstellung zum Beispiel unter mehreren möglichen Drehstellungen auswählbar ist.

11. Vorrichtung nach einem der Ansprüche 1 bis 10, **dadurch gekennzeichnet, dass** der genannte andere, mit dem Bolzen (80) oder der Schraube (180) am Implantat (1) befestigbare, keramische Körper (90) zum Befestigen einer Krone (110) oder einer Brücke oder einer mehrere künstliche Zähne aufweisenden Prothese ausgebildet ist.

12. Vorrichtung nach einem der Ansprüche 1 oder 3 bis 7 oder 9 bis 11, **dadurch gekennzeichnet, dass** der mit einer Schraube (180) am Implantat (1) befestigbare, keramische Körper ein durchgehendes, axiales Loch hat, das die Auflagefläche enthält, auf welcher der Kopf (183) der Schraube (180) bei zusammengebauter Vorrichtung aufliegt, und dass die Schraube (180) aus dem genannten anderen keramischen Körper herausnehmbar ist.

13. Vorrichtung nach einem der Ansprüche 1 bis 12, **dadurch gekennzeichnet, dass** das Loch (35, 377) eine Mündung (36) und ein Innengewinde (38, 378) hat dass der Bolzen (80, 392) einen mit dem Innengewinde (38, 378) verschraubbaren Gewindeabschnitt (82) hat, dass das Loch (35) zwischen der Mündung (36) und dem Innengewinde (38) einen zylindrischen Lochabschnitt (37) mit einem Durchmesser hat, der mindestens gleich dem maximalen Durchmesser des Innengewindes (38) ist und dass der Bolzen (80, 392) einen zylindrischen Abschnitt (84) hat, der bei zusammengebauter Vorrichtung mit höchstens kleinem, radialem Spiel im zylindrischen Lochabschnitt (37) abgestützt ist.

## Claims

1. Device for holding and/or creating a dental prosthesis, with an implant (1) which is intended to be at least partially anchored in a bone (71) and has an axis (3), an annular surface (22) forming an angle with said axis (3), a metal main body (50) with an axial hole (35, 377), and a ceramic body (60) which is secured on the main body (50), in cross section surrounds a portion of the main body (50) and forms at least part of the annular surface (22), and with another ceramic body (90) secured on a metal bolt (80) which can be secured in the hole (35) of the main body (50), **characterized in that**, instead of the bolt (80), a screw (180) can be provided which can be secured in the hole (35) of the main body (50) and which, when the device is assembled, rests with a head (183) on a bearing surface of the other ceramic body, and **in that**, when the device is screwed together, the other ceramic body (90) which is secured on the bolt (80) and which can be secured with this on the implant (1) or can be secured with the screw (180) on the implant (1) lies with an annular bearing surface (92) directly on the annular surface (22) of the implant (1) and on the ceramic body (60) belonging to the implant (1) and at least partially forming this annular surface (22).

2. Device according to Claim 1, **characterized in that** the hole (91) of the other ceramic body (90) secured on the bolt (80) is a blind hole and has an end directed away from the main body (90) [sic] and-closed off by ceramic material of the ceramic body (90).

3. Device according to Claim 1 or 2, **characterized in that** the annular surface (22) of the implant (1) and the bearing surface (92) are conical or **in that**, when the device is assembled, said other ceramic body (90) fits with a conical portion (291) in a conical portion (267) of the hole (35) of the main body (50).

4. Device according to one of Claims 1 to 3, **characterized in that** the implant (1) has a head (7) which protrudes away from the annular surface (22) and which, when the ceramic body (90) lies on the annular surface (22) when the device is assembled, supports said other ceramic body (90) with at most slight radial play at least at one inner surface (93, 94) formed by the hole (91) of the ceramic body (90).

5. Device according to one of Claims 1 to 4, **characterized in that** the implant (1) has a first end (8), intended for deepest insertion into the bone (71), and a second end (9), and **in that** the annular surface (22) of the implant (1) is at least partially conical and inclined outward to the first end (8) of the implant (1).

6. Device according to one of Claims 1 to 5, **characterized in that** the ceramic body (60) belonging to the implant (1) and surrounding the metal main body (50) is annular and/or sleeve-shaped and is secured substantially nonreleasably on the main body (50) by means of a press-fit connection and/or a binder and/or a hard solder connection.

7. Device according to one of Claims 1 to 6, **characterized in that** the hole (35, 377) of the main body (50) has an internal thread (38, 378), **in that** the bolt (80) has an external thread (83) which can be screwed into this, **in that** the hole (35, 377) of the main body (50) has a mouth (36) and, between this and the internal thread (38, 378), a cylindrical or conical hole portion (37, 267, 377) with a greater diameter than the internal thread (38, 378), and **in that**, when the device is assembled, this hole portion (37, 267, 377) directly supports the bolt (80), or a ring (271) surrounding the latter, or a portion (291) of the ceramic body (90) protruding into the hole portion (37, 367), with at most slight radial play.

8. Device according to one of Claims 1 to 7, **characterized in that** the bolt and the hole of the ceramic body secured thereon have non-rotationally symmetrical portions, which fit into each other with extremely small play, and are for example polygonal and/or have at least one plane surface which is parallel with the axis or forms, with the latter, an angle other than 90°.

9. Device according to one of Claims 1 to 8, **characterized in that** the ceramic body (60) belonging to the implant (1) and secured on the main body (50) has, at its said end, at least one protuberance (402) and/or at least one recess (433), **in that** at least an outer area of the annular surface (22) of the implant (1) surrounds the or each protuberance (402) and/or the or each recess (433) and is continuously smooth along its entire periphery and is either conical or plane, and **in that**, when the device is assembled, the other ceramic body (90), which can be secured with a bolt (80) or a screw (180) on the implant, lies along the entire periphery of the bearing surface (92) on said area of the annular surface (22) of the implant (1).

10. Device according to Claim 9, **characterized in that**, when the device is assembled, said other ceramic body (90), which can be secured with the bolt (80) or the screw (180) on the implant, does not engage with the at least one protuberance (402) and/or the at least one recess (433) and is rotatable about the axis (3) until it is secured, or **in that**, when the device is assembled, said other ceramic body, which can be secured with a screw (180) on the implant (1), is positioned in a rotationally fixed manner in a position of rotation by the at least one protuberance (402) and/or the at least one recess (433), which position of rotation can be selected for example from a number of possible positions of rotation.

11. Device according to one of Claims 1 to 10, **characterized in that** said other ceramic body (90), which can be secured with the bolt (80) or the screw (180) on the implant (1), is designed to secure a crown (110), or a bridge, or a prosthesis comprising a plurality of artificial teeth.

12. Device according to one of Claims 1 or 3 to 7 or 9 to 11, **characterized in that** the ceramic body, which can be secured with a screw (180) on the implant (1), has a continuous axial hole which includes the bearing surface on which the head (183) of the screw (180) rests when the device is assembled, and **in that** the screw (180) can be removed from said other ceramic body.

13. Device according to one of Claims 1 to 12, **characterized in that** the hole (35, 377) has a mouth (36) and an internal thread (38, 378), **in that** the bolt (80, 392) has a threaded portion (82) which can be screwed with the internal thread (38, 378), **in that** the hole (35) between the mouth (36) and the internal thread (38) has a cylindrical hole portion (37) with a diameter which is at least equal to the maximum diameter of the internal thread (38), and **in that** the bolt (80, 392) has a cylindrical portion (84) which, when the device is assembled, is supported with at most slight radial play in the cylindrical hole portion (37).

## Revendications

1. Dispositif pour maintenir et / ou former une prothèse dentaire, avec un implant (1) destiné au moins en partie à être ancré dans un os (71), lequel présente un axe (3), une surface annulaire (22) formant un angle avec celui-ci, un corps de base métallique (50) avec un trou axial (35, 377) et un corps en céramique (60) qui est fixé sur le corps de base (50), entoure en coupe transversale une section du corps de base (50) et forme au moins une partie de la surface annulaire (22), et avec un autre corps en céramique (90) qui est fixé sur un boulon (80) métallique pouvant être fixé dans le trou (35) du corps de base (50), **caractérisé en ce qu'**il peut y avoir, à la place du boulon (80), une vis (180) pouvant être fixée dans le trou (35) du corps de base (50), laquelle repose par une tête (183) sur une surface d'appui de l'autre corps en céramique, quand le dispositif est assemblé, et **en ce que** l'autre corps en céramique (90) fixé sur le boulon (80) et pouvant être fixé avec celui-ci sur l'implant (1) ou pouvant être fixé avec la vis (180) sur l'implant (1) repose par une surface d'appui annulaire (92) directement sur la surface annulaire (22) de l'implant (1) et sur le corps en céramique (60) formant au moins en partie cette surface annulaire (22), faisant partie de l'implant (1), quand le dispositif est assemblé.

2. Dispositif selon la revendication 1, **caractérisé en ce que** le trou (91) de l'autre corps en céramique (90) fixé sur le boulon (80) est un trou borgne et a une extrémité opposée au corps de base (90) fermée par de la matière céramique du corps en céramique (90).

3. Dispositif selon la revendication 1 ou 2, **caractérisé en ce que** la surface annulaire (22) de l'implant (1) et la surface d'appui (92) sont coniques ou **en ce que** ledit autre corps en céramique (90) repose par une section conique (291) dans une section conique (267) du trou (35) du corps de base (50) quand le dispositif est assemblé.

4. Dispositif selon une des revendications 1 à 3, **caractérisé en ce que** l'implant (1) a une tête (7) faisant saillie de la surface annulaire (22), laquelle tête supporte, au niveau au moins d'une surface intérieure (93, 94) formée par le trou (91) du corps en céramique (90), avec tout au plus un petit jeu radial ledit autre corps en céramique (90) lorsque celui-ci repose sur la surface annulaire (22) quand le dispositif est assemblé.

5. Dispositif selon une des revendications 1 à 4, **caractérisé en ce que** l'implant (1) a une première extrémité (8) destinée à être profondément insérée dans l'os (71) et une deuxième extrémité (9) et **en ce que** la surface annulaire (22) de l'implant (1) est au moins en partie conique et inclinée vers l'extérieur en direction de la première extrémité (8) de l'implant (1).

6. Dispositif selon une des revendications 1 à 5, **caractérisé en ce que** le corps en céramique (60) faisant partie de l'implant (1), entourant le corps de base (50) métallique est en forme d'anneau ou de gaine et est fixé de manière essentiellement inamovible sur le corps de base (50) par une connexion par serrage ajusté et / ou un liant et / ou une connexion par apport de métal de brasage fort.

7. Dispositif selon une des revendications 1 à 6, **caractérisé en ce que** le trou (35, 377) du corps de base (50) a un filetage intérieur (38, 378), **en ce que** le boulon (80) a un filetage extérieur (83) pouvant être vissé dans celui-ci, **en ce que** le trou (35, 377) du corps de base (50) présente une embouchure (36) et, entre celle-ci et le filetage intérieur (38, 378), une section de trou cylindrique ou conique (37, 267, 377) avec un diamètre plus grand que le filetage intérieur (38, 378) et **en ce que** cette section de trou (37, 267, 377) supporte directement le boulon (80) ou un anneau (271) entourant celui-ci ou une section (291) du corps en céramique (90) faisant saillie dans la section de trou (37, 367) avec tout au plus un petit jeu radial, quand le dispositif est assemblé.

8. Dispositif selon une des revendications 1 à 7, **caractérisé en ce que** le boulon et le trou du corps en céramique fixé sur celui-ci ont des sections sans symétrie de révolution s'emboîtant l'une dans l'autre avec tout au plus un petit jeu et sont par exemple polygonales et / ou ont au moins une surface plane qui est parallèle à l'axe ou qui forme avec celui-ci un angle autre que 90°.

9. Dispositif selon une des revendications 1 à 8, **caractérisé en ce que** le corps en céramique (60) faisant partie de l'implant (1), fixé sur le corps de base (50) a, à sa dite extrémité, au moins une protubérance (402) et / ou au moins un évidement (433), **en ce qu'**au moins une région extérieure de la surface annulaire (22) de l'implant (1) entoure la ou chaque protubérance (402) et / ou le ou chaque évidement (433) et est complètement lisse ainsi que conique ou plane sur toute sa périphérie et **en ce que** l'autre corps en céramique (90) pouvant être fixé sur l'implant avec un boulon (80) ou une vis (180) repose sur ladite région de la surface annulaire (22) le long de toute la périphérie de la surface d'appui (92), quand le dispositif est assemblé.

10. Dispositif selon la revendication 9, **caractérisé en ce que** ledit autre corps en céramique (90) pouvant être fixé sur l'implant (1) avec le boulon (80) ou la vis (180) n'entre pas en prise, quand on assemble le dispositif, avec l'au moins une protubérance (402) et / ou l'au moins un évidement (433) et peut tourner autour de l'axe (3) jusqu'à sa fixation ou **en ce que** ledit autre corps en céramique pouvant être fixé sur l'implant (1) avec une vis (180) est positionné par l'au moins une protubérance (402) et / ou l'au moins un évidement (433) dans une position de rotation sans pouvoir tourner, quand le dispositif est assemblé, cette position de rotation pouvant être choisie, par exemple, parmi plusieurs positions de rotation possibles.

11. Dispositif selon une des revendications 1 à 10, **caractérisé en ce que** ledit autre corps en céramique (90) pouvant être fixé sur l'implant (1) avec le boulon (80) ou la vis (180) est conçu pour fixer une couronne (110) ou un bridge ou une prothèse présentant plusieurs dents artificielles.

12. Dispositif selon une des revendications 1 ou 3 à 7 ou 9 à 11, **caractérisé en ce que** le corps en céramique pouvant être fixé sur l'implant (1) par une vis (180) a un trou axial passant qui a une surface d'appui sur laquelle la tête (183) de la vis (180) repose, quand le dispositif est assemblé, et **en ce que** la vis (180) peut être enlevée dudit autre corps en céramique.

13. Dispositif selon une des revendications 1 à 12, **caractérisé en ce que** le trou (35, 377) a une embouchure (36) et un filetage intérieur (38, 378), **en ce que** le boulon (80, 392) a une section filetée (82) pouvant être vissée avec le filetage intérieur (38, 378), **en ce que** le trou (35) a, entre l'embouchure (36) et le filetage intérieur (38), une section de trou cylindrique (37) ayant un diamètre qui est au moins égal au diamètre maximal du filetage intérieur (38), et **en ce que** le boulon (80, 392) a une section cylindrique (84) qui s'appuie dans la section de trou cylindrique (37) avec tout au plus un petit jeu radial, quand le dispositif est assemblé.
